# EUROPEAN PATENT APPLICATION

(11) **EP 4 333 108 A1**
(43) Date of publication of application: **06.03.2024**
(21) Application number: 23187061.9
(22) Date of filing: 21.07.2023
(51) Int. Cl.: H01M 4/133, H01M 4/587, H01M 10/0525

(54) **SURFACE MODIFIED CARBONACEOUS MATERIAL, METHOD OF MANUFACTURING SURFACE-MODIFIED CARBONACEOUS MATERIAL, LIQUID COMPOSITION, CONTAINER, DEVICE FOR MANUFACTURING ELECTRODE, METHOD OF MANUFACTURING ELECTRODE, AND ELECTROCHEMICAL ELEMENT**

(30) Priority: 25.07.2022 JP 2022118277
(71) Applicant: Ricoh Company, Ltd., Tokyo 143-8555 (JP)
(72) Inventor: HIGASHI, Ryuji, Tokyo, 143-8555 (JP); MOTOHASHI, Yuuichi, Tokyo, 143-8555 (JP); GOTO, Daisuke, Tokyo, 143-8555 (JP)
(74) Representative: Marks & Clerk LLP

(57) **Abstract**

A surface-modified carbonaceous material contains a carbonaceous material to which a substituent represented by the following Chemical Formula 1 is added, 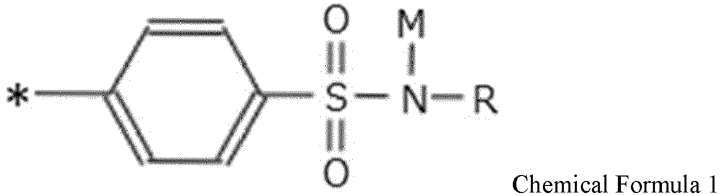 where M represents a metal ion, an organic amine, or ammonium, * represents a binding site, and R represents the following Chemical Formula 2 or the following Chemical Formula 3, 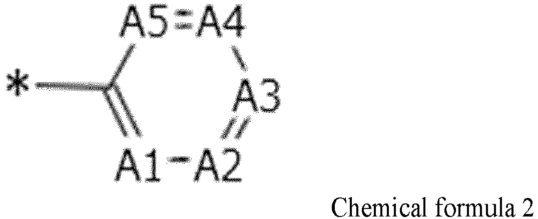 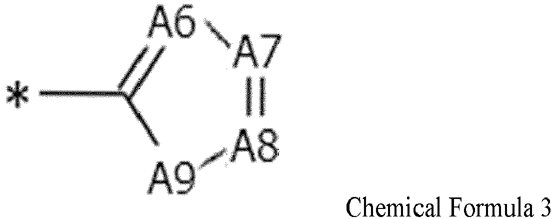 where A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

## Description

### BACKGROUND

### Technical Field

The present disclosure relates to a surface-modified carbonaceous material, a method of manufacturing surface-modified carbonaceous material, a liquid composition, a container, a device for manufacturing electrode, a method of manufacturing electrode, and an electrochemical element.

### Description of the Related Art

A substrate (base material) can have a function of a carbonaceous material by applying the carbonaceous material to the surface of the base material. One way of applying a carbonaceous material to a base material is to coat the base material with a liquid composition in which a carbonaceous material is dispersed in a dispersion medium by inkjetting. Generally, a dispersant is added to disperse a carbonaceous material in a dispersion medium. Since this usage of dispersant causes problems, there is demand for a technology of dispersing a carbonaceous material without a dispersant.

Technologies for dispersing a carbonaceous material in an aqueous medium have been developed in the field of inkjetting, where carbon particles are used as coloring matter. So-called self-dispersive carbonaceous materials, in which a functional group is introduced into the edge of the carbon plane by radical reaction, have been proposed in WO96/18688, Japanese Unexamined Patent Application Publication No. 2016-27092, and Japanese Unexamined Patent Application Publication No. 2016-27093.

### SUMMARY

According to embodiments of the present disclosure, an improved surface-modified carbonaceous material is provided that has excellent self-dispersibility to a non-protonic polar solvent widely used to substances such as electrochemical element.

According to embodiments of the present disclosure, a surface-modified carbonaceous material is provided which contains a carbonaceous material to which a substituent represented by the following Chemical Formula 1 is added, 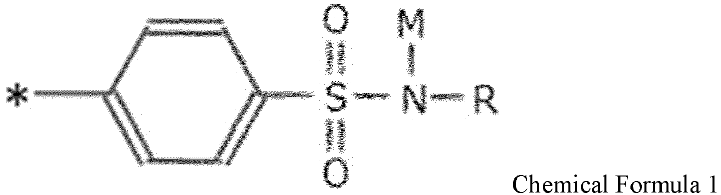 where M represents a metal ion, an organic amine, or ammonium, * represents a binding site, and R represents the following Chemical Formula 2 or the following Chemical Formula 3, 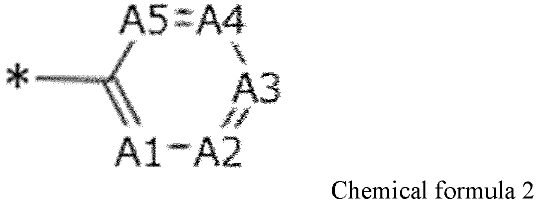 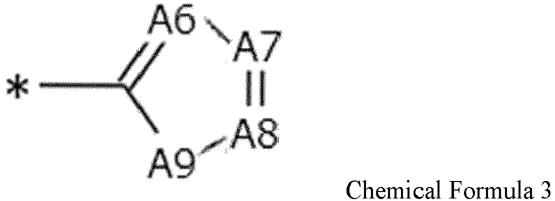 where A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

As another aspect of embodiments of the present disclosure, a method of manufacturing a surface-modified carbonaceous material is provided that includes allowing to react a radical compound represented by the following Chemical Formula 4 with the surface of a carbonaceous material to bond a functional group represented by the following Chemical formula 1 to the surface of the carbonaceous material, 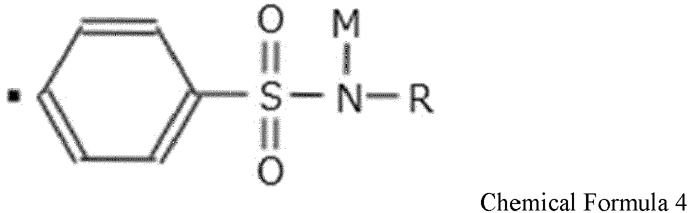 where M represents a metal ion, an organic amine, or ammonium, ■ represents a radical, and R represents the following Chemical Formula 2 or the following Chemical Formula 3, 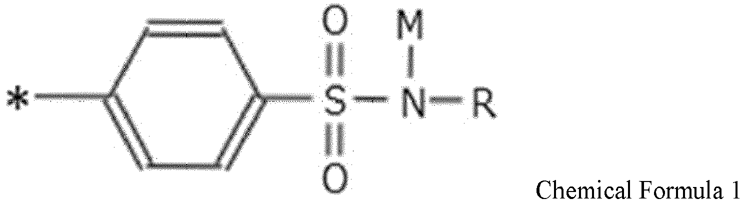 where M represents a metal ion, an organic amine, or ammonium, * represents a binding site, and R represents the following Chemical Formula 2 or the following Chemical Formula 3, 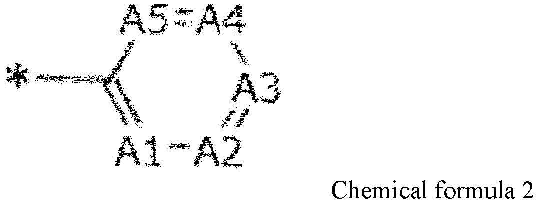 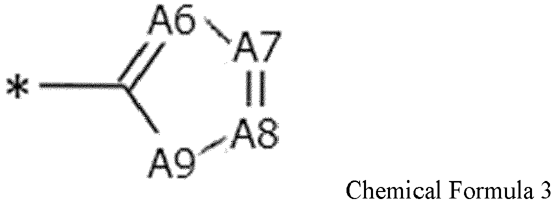 where A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

As another aspect of embodiments of the present disclosure, an electrode is provided which includes a current collector and an electrode mixture layer containing the surface-modified carbonaceous material mentioned above.

As another aspect of embodiments of the present disclosure, a liquid composition is provided that contains the surface-modified carbonaceous material mentioned above and an organic solvent at least one of an aprotic polar solvent and an alcohol solvent.

As another aspect of embodiments of the present disclosure, an accommodating unit is provided which includes a container containing the liquid composition mentioned above.

As another aspect of embodiments of the present disclosure, an accommodating unit is provided which includes a container containing the liquid composition mentioned above.

As another aspect of embodiments of the present disclosure, a device for manufacturing an electrode is provided which includes the accommodating unit mentioned above and a device for applying the liquid composition to a target.

As another aspect of embodiments of the present disclosure, a method of manufacturing an electrode is provided that applying the liquid composition mentioned above.

As another aspect of embodiments of the present disclosure, a method is provided which includes applying by inkjetting.

As another aspect of embodiments of the present disclosure, an electrochemical element is provided which includes the electrode mentioned above.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating the Chemical Formula 1 in the surface-modified carbonaceous material according to an embodiment of the present invention;
FIG. 2 is a schematic diagram illustrating an electrode according to an embodiment of the present invention;
FIG. 3 is a schematic diagram illustrating a liquid discharging device as a device for manufacturing an electrode according to an embodiment of the present invention;
FIG. 4 is a schematic diagram illustrating a variation of the liquid discharging device illustrated in FIG. 3;
FIG. 5 is a schematic diagram illustrating a liquid discharging device as a device for manufacturing an electrode according to another embodiment of the present invention;
FIG. 6 is a schematic diagram illustrating a variation of the liquid discharging device illustrated in FIG. 5;
FIG. 7 is a printing unit using an intermediate drum as a device for manufacturing an electrode according to an embodiment of the present invention;
FIG. 8 is a printing unit using an intermediate belt as a device for manufacturing an electrode according to an embodiment of the present invention;
FIGS. 9A, 9B, and 9C are schematic diagrams illustrating examples of manufacturing in the method of manufacturing an electrode according to an embodiment of the present invention;
FIG. 10 is a diagram illustrating an example of the configuration of the head with a parallelogram nozzle plate;
FIG. 11 is a diagram illustrating a state in which the heads of FIG. 10 are arranged; and
FIG. 12 is a schematic diagram illustrating an example of the electrochemical element having a negative electrode, a positive electrode, and a separator.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

### Surface-modified Carbonaceous Material

The surface-modified carbonaceous material of the present disclosure is a carbonaceous material to which a substituent represented by the following Chemical Formula 1 is added.

In other words, the surface-modified carbon material has a substituent represented by the following Chemical Formula 1 added to a carbonaceous material.

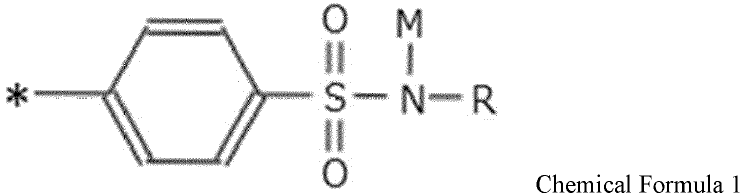

In the Chemical Formula 1, M represents a metal ion, an organic amine, or ammonium, * represents a binding site, and R represents the following Chemical Formula 2 or the following Chemical Formula 3.

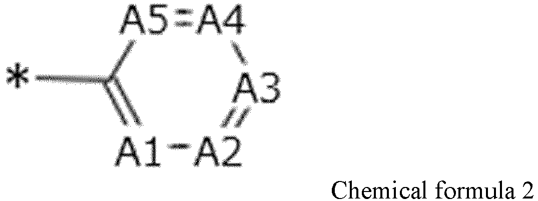

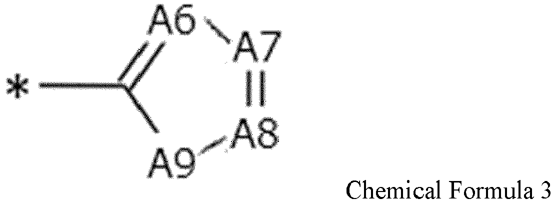

In the Chemical Formulae 2 and 3, A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

The surface-modified carbonaceous material of the present disclosure is based on the knowledge about the following typical technologies.

A technology of applying a carbonaceous material to the surface of a base material to impart a function of the carbonaceous material has been demanded; however, dispersing a carbonaceous material with a dispersant involves a problem of degrading conductivity of the carbonaceous material resulting from the coverage of the surface of the carbonaceous material deriving from the binding principle of the dispersant.

Most of the typical technologies of dispersing a carbonaceous material such as a carbon-based conductive particle without using a dispersant is about dispersing in an aqueous medium.

Development of particles or a liquid composition using a non-aqueous medium, particularly, an aprotic polar solvent such as N-methyl-2-pyrrolidone (NMP), which is widely used for producing an electrochemical element, typically a secondary battery, as a dispersion medium, has not progressed as expected.

As a result of the investigation as described below, the inventors of the present invention have found out and formulated a surface-modified carbonaceous material having a substituent represented by the Chemical Formula 1 added to the surface of a carbonaceous material. This surface-modified carbonaceous material has excellent self-dispersibility to an aprotic polar solvent, which is widely used for electrochemical elements.

Dispersibility in an aqueous medium is mostly achieved using so-called electric double layer repulsive force. Ionic substituents are used as dispersion groups in most cases. Compared with water, a non-aqueous medium with a low polarity has a weak electric double layer repulsive force. Dispersing in such a non-aqueous medium is difficult in comparison with an aqueous medium, which explains why the development mentioned above is not progressed.

One way of applying a carbonaceous material to the surface of a carbonaceous material to impart the function of the carbonaceous material is to form an electrochemical element including a lithium ion secondary battery using a liquid composition in which the carbonaceous material is dispersed in a solvent medium.

Electrochemical elements including a lithium ion secondary battery have a high energy density. Therefore, these elements are expected to be applied to electric devices and vehicles like automobiles. Of these, particularly, safe secondary batteries are demanded. Generally, electrochemical elements have a basic configuration of a current collector (positive electrode), an electrode mixture layer (positive electrode layer), a separator such as paper, unwoven cloth, and porous film, an electrode mixture layer (negative electrode), and a current collector (negative electrode).

This electrode mixture layer is generally obtained by applying a dispersion of active material particles and carbon-based particles or carbon-based fiber, or a liquid composition obtained by applying a liquid composition obtained by dispersing active material particles in a dispersion medium to a current collector foil. The electrode mixture layer has to have both ion conductivity and electron conductivity. To obtain an electrode mixture layer with a high electron conductivity, a carbon black secondary aggregate is demanded, which is developed from a porous aggregate having a small primary particle diameter and a large specific surface area. In general, in order to stably disperse particles having such an aggregate structure with a large specific surface area, a large amount of dispersant in accordance with the specific surface area is needed. However, dispersants do not have an impact on the performance of a battery, or may reduce performance depending on the situation.

Methods of enhancing the battery performance of a lithium ion battery using carbon-metal complex current collector foil in which an electroconductive layer of carbon particles is applied onto the current collector foil has been proposed in Japanese Unexamined Patent Application Publication No. 2007-226969 and Japanese Unexamined Patent Application Publication No. 2010-135338. In these proposals, most of the batteries are manufactured by applying a liquid composition containing carbon particles onto metal current collector foil. Liquid with low viscosity is used in general to form an electroconductive layer in a noncontact manner by a method, particularly, inkjetting. When such a liquid is used, a large amount of dispersant is used to stably disperse carbon particles as in the case of the electrode mixture layer. However, dispersants do not have an impact on the performance of a battery, or may reduce performance depending on the situation. Therefore, dispersion with a small amount of dispersant is demanded and dispersion without a dispersant is preferable.

A lithium battery obtained by applying a hybrid layer of silver particles and carbon particles onto a current collector foil has been proposed to reduce the occurrence of lithium dendrite in Japanese Unexamined Patent Application Publication No. 2019-96610. To manufacture this lithium battery, a large amount of dispersant is expected to stably disperse the carbon particles. Therefore, as in the case described above, the smaller the amount of dispersant, the better. Dispersion without a dispersant is preferable.

The dispersant for use in a carbonaceous material contains an aromatic compound as an adsorption group. It includes, for example, dispersants in Chemistry Letters 36(6), pp. 692-697, 2007). The surface of a carbonaceous material is constituted of the π plane. Since the carbonaceous material has a small number of functional groups, so-called anchor portions that a dispersant adsorbs is small, so that the carbon π plane is used as the anchor portions in most cases. This adsorption relates to strong π-π stacking mutual action of the adsorption group of a dispersant and the carbon π plane.

However, since the dispersant designed in this manner is present above the π electron cloud of a carbon particle, the dispersant as a foreign element is placed between the overlapped portion of the π electron cloud-π electron cloud as the main electron transfer mechanism between the carbon particles. The presence of the dispersant may thus degrade electron transfer.

Based on the knowledge mentioned above, the inventors of the present invention have made the present invention.

### Carbonaceous Material

The carbonaceous material is not particularly limited and can be suitably selected to suit to a particular application. Examples include, but are not limited to, amorphous carbonaceous material such as carbon black, carbon fiber such as graphite, graphene, carbon nanotube, and vapor growth carbon fiber (VGCF), mono or complex material having a so-called graphene structure such as nanodiamond.

Of these, carbon black is preferable because microparticles thereof agglomerate and thus have a large network structure per mass, which is widely used as electrochemical materials for electrochemical elements such as lithium ion batteries.

This carbon black is not particularly limited and can be suitably selected to suit to a particular application. Specific examples include, but are not limited to, channel black, roller black, disk black, furnace black, thermal black, and acetylene black. Of these, furnace black and acetylene black are more preferable to achieve high secondary battery properties. Of furnace blacks, ketjen black that has a particularly large a particularly large specific surface area is more preferable because of the particularly large specific surface area.

### Substituent Represented by Chemical Formula 1

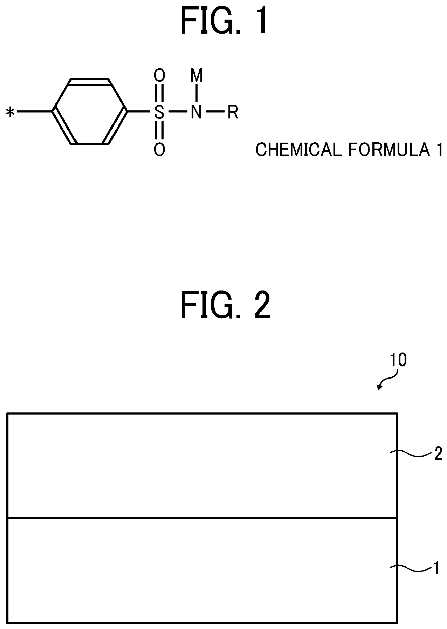

The substituent mentioned above is represented by the Chemical Formula 1. FIG. 1 is a diagram illustrating the Chemical Formula 1 in the surface-modified carbonaceous material of the present disclosure;

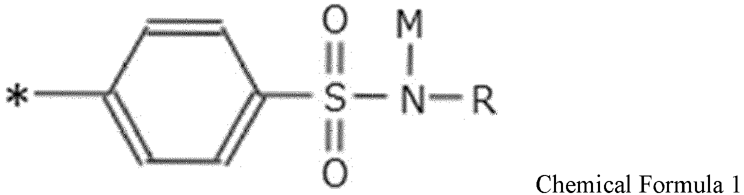

In the Chemical Formula 1, M represents a metal ion, an organic amine, or ammonium, * represents a binding site, and R represents the following Chemical Formula 2 or the following Chemical Formula 3,

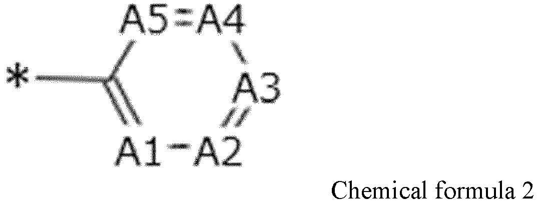

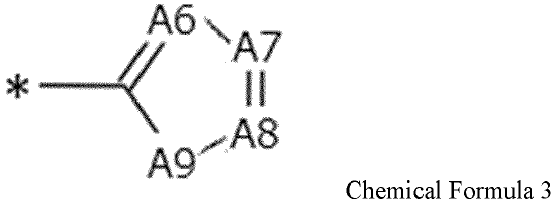

In the Chemical Formulae 2 and 3, A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

The M in the Chemical Formula 1 representing a metal ion, an organic amine, and ammonium can bond with the nitrogen atom N in the Chemical Formula 1 with ionic bond, covalent bond, and bond of mixture of ionic bond and covalent bond, and can be separated as a counter ion.

The metal ion represents a positively-charged atom or molecule and preferably a single-valent alkali metal ion to achieve dispersion stability. Lithium ion as an ion conductive carrier is preferable when the surface-modified carbonaceous material mentioned above is used as the carbonaceous material for a lithium ion battery.

The organic amine is not particularly limited and can be suitably selected to suit to a particular application. Specific examples include, but are not limited to, trimethylamine, N,N-dimethylethylamine, triethylamine, 1-methylpyrrolidine, N-butyldimethylamine, 1-ethylpiperidine, 4-hydroxy-1-methylpiperidine, N,N-dimethylformamide dimethyl acetal, N,N-diisopropylethylamine, 4-(2-hydroxyethyl) morpholine, 3-dipropylaminoethanol, 2-[2-(dimethylamino)ethoxy] ethanol, N-ethyldiethanolamine, 2-(dimethylamino) ethanol, and pyridine derivatives.

In the Chemical Formula 2, A1, A2, A3, A4, and A5 each, independently represent CR's or N's. In the Chemical Formula 2, the number of N is any of from 0 to 5, preferably from 1 to 3, and more preferably 1 or 2.

The substituent R represented by the Chemical Formula 2 is preferably the following.

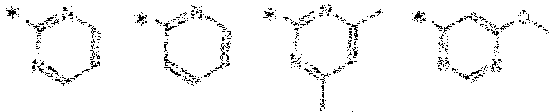

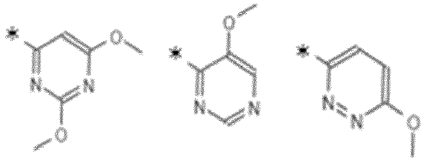

In the Chemical Formula 3, A6, A7, and A8 each, independently represent CR's or N's and A9 represents CR'R', NR' O or S. In the Chemical Formula 3, the numbers of hetero atoms N, O, and S are any of from 0 to 4, preferably from 1 to 3, and more preferably 2 or 3.
The substituent R represented by the Chemical Formula 3 is preferably the following.

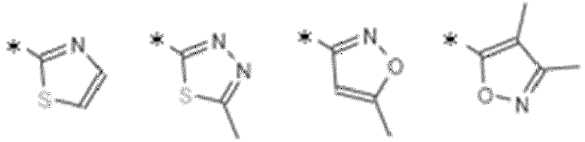

The alkyl group and the alkoxy group in the Chemical Formula 2 and Chemical Formula 3 are not particularly limited and can be suitably selected to suit to a particular application. Preferably, the alkyl group has 1 to 12 carbon atoms and the alkoxy group has 1 to 12 carbon atoms.

Specific examples of the alkyl group include, but are not limited to, a methyl group, an ethyl group, a propyl group, a butyl group, a hexyl group, an octyl group, a decyl group, and a dodecyl group
Specific examples of the alkoxy group include, but are not limited to, a methoxy group, an ethoxy group, a propyloxy group, a butyloxy group, a hexyloxy group, an octyl group, a decyl group, and a dodecyloxy group
"Surface-modified" and "substituent added to a carbonaceous material" mean covalent-bonding a substituent to the graphene structure in the carbonaceous material as a base material and a structure obtained by covalent-bonding a substituent.

According to the method of manufacturing the surface-modified carbonaceous material of the present disclosure, which is described later, the surface-modified carbonaceous material having a substituent added to a carbonaceous material of the present disclosure can be suitably manufactured.

### Dipole Moment of Surface-modified Carbonaceous Material

The dipole moment of the surface-modified carbonaceous material is not particularly limited and can be suitably selected to suit to a particular application. It is preferably 4.0 debye or greater and more preferably 5.0 debye or greater.

The functional group in the surface-modified carbonaceous material of the present disclosure demonstrates its function in a form of substitution (covalent bond) to the graphene edge of the carbonaceous material. However, since there are many types of the structures, graphene structures, of carbonaceous materials, it is common to set a model compound using the generalized structure of the carbonaceous material before calculation.

In the present disclosure, the dipole moment is calculated using the model compound to which a target functional group is added to the 9 position of the anthracene ring. The calculation is made using a non-empirical molecular orbital method.

The dipole moment of the surface-modified carbonaceous material is calculated by the non-empirical molecular orbital method using the model compound in which the carbonaceous material of the surface-modified carbonaceous material is converted into anthracene, the substituent is imparted to the 9 position of the anthracene, and M in the substituent is converted into H.

Due to such a model compound, the structure is optimized for quantum scientific calculation. Then quantum calculation is conducted based on the structure of the model compound to calculate the dipole moment.

Specifically, the dipole moment is calculated using quantum calculation chemical program, Gaussian 16, created by Gaussian Inc., USA.

The unit of dipole moment, debye, is represented by [C·m] in SI unit and converted by the conversion expression of 1 debye = 3.336 × e⁻³⁰ [C·m].

### Dispersibility

Dispersibility of the surface-modified carbonaceous material is indicated by the size of the median size of the surface-modified carbonaceous material in a liquid composition and evaluated based on the comparison with a liquid composition containing the same type of a carbonaceous material as a reference.

A liquid composition containing a carbonaceous material without a substituent demonstrates poor dispersibility and agglomerates in the liquid composition, thus increasing the median size. On the other hand, a liquid composition containing a surface-modified carbonaceous material with good dispersibility results in a small median size.

Since the surface-modified carbonaceous material is self-dispersive even without any additional dispersant, it may be referred to as having "self-dispersibility" or "self-dispersibility"being high.

Dispersibility of the surface-modified carbonaceous material is evaluated by the following method.

A surface-modified carbonaceous material is placed in an organic solvent of at least one of an aprotic polar solvent and an alcohol solvent to obtain a mixture having a solid portion at 10 percent by mass. The mixture is subjected to ultrasonic wave irradiation for three minutes using an ultrasonic wave homogenizer (Ultrasonic Generator, manufactured by NISSEI Corporation) for dispersion to obtain a liquid composition. The liquid composition obtained is diluted at a factor of 1,000 in the organic solvent used for dispersion followed by measuring the particle size distribution using a dynamic light scattering meter (NanoSAQLA, manufactured by OTSUKA ELECTRONICS Co., LTD.) to obtain a median size D₅₀.

"Organic solvent of at least one of an aprotic polar solvent and an alcohol solvent" can be selected based on the description for the liquid composition of the present disclosure described later.

"The liquid composition" or "dispersion" containing the surface-modified carbonaceous material and the organic solvent of at least one of an aprotic polar solvent and an alcohol solvent refers to the state in which the particles of the surface-modified carbonaceous material of a size of around 5 to 5,000 nm are floating or suspending in a liquid.

The method of identifying the structure in the surface-modified carbonaceous material in which a substituent represented by the following Chemical Formula 1 is added to a carbonaceous material is not particularly limited and can be suitably selected from known methods to suit to a particular application. It includes, but is not limited to, a method using an electron spectroscopy, X-ray absorption near edge structure (XANES), a method of identifying the structure based on the behavior of proton or carbon by solid nuclear magnetic resonance (NMR), and a method of identifying the structure based on the behavior of the radical by electron spin resonance (ESR).

The method using electron spectroscopy is to identify the structure of a surface-modified carbon material by measuring the spectra of a particular substituent structure of a sample applied onto a glass substrate using an X-ray photoelectron spectroscopy (XPS) (LJPS-9030, manufactured by JASCO Corporation).

The method of identifying the structure based on the behavior of proton or carbon by solid NMR is to identify the structure of a surface-modified carbon material by identifying the substituent structure from the peak of proton or the peak of carbon identified by measuring a sample powder with a nuclear magnetic resonance device (JNM-ECA700, manufactured by JEOL Ltd.) at room temperature (25 degrees C).

### Method of Manufacturing Surface-modified Carbonaceous Material

The method of manufacturing the surface-modified carbonaceous material of the present disclosure includes allowing to react the radical compound represented by the following Chemical Formula 4 with the surface of a carbonaceous material to bond the functional group represented by the following Chemical formula 1 to the surface of the carbonaceous material and other optional process.

The substituent represented by the Chemical Formula 1 can be bonded (covalent bonding) to the surface of the carbonaceous material by a known method, which is within the scope of the present invention. The method of covalent bonding the radical compound represented by the Chemical Formula 4 obtained by radicalizing the substituent represented by the Chemical Formula 1 with the graphene edge of the carbonaceous material is preferable.

The method of covalent bonding a radicalized substituent to the graphene edge of a carbonaceous material is not particularly limited and can be suitably selected from known methods to suit to a particular application. The method can be selected from those disclosed in WO patent No. 96/18688, Japanese Unexamined Patent Application Publication No. 2016-27092, and Japanese Unexamined Patent Application Publication No. 2016-27093, for example, and suitably applied to the radical compound represented by the Chemical Formula 4.

### Radical Compound Represented by Chemical Formula 4

The radical compound is represented by the following Chemical Formula 4.

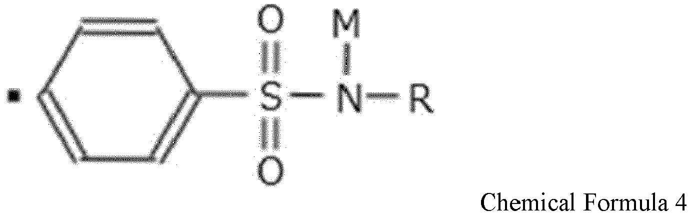

In Chemical Formula 4, M represents a metal ion, an organic amine, or ammonium, ■ represents a radical, and R represents the following Chemical Formula 2 or the following Chemical Formula 3,

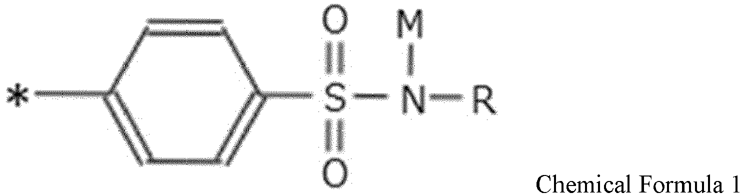

In the Chemical Formula 1, M represents a metal ion, an organic amine, or ammonium, * represents a binding site, and R represents the following Chemical Formula 2 or the following Chemical Formula 3,

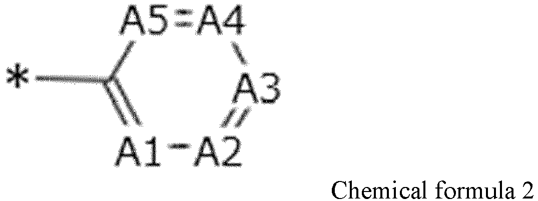

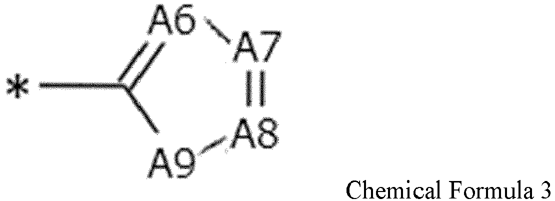

In Chemical Formulae 2 and 3, A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

The metal ion, organic amine, and ammonium as M in the Chemical Formula 4 can be suitably selected according to the descriptions for the Chemical Formula 1.

The Chemical Formulas 2 and 3 can be suitably selected according to the descriptions for the Chemical Formula 1.

The method of obtaining a radical compound (organic radical) is not particularly limited and can be suitably selected from known methods to suit to a particular application. The method can be selected from those disclosed in WO patent No. 96/18688, Japanese Unexamined Patent Application Publication No. 2016-27092, and Japanese Unexamined Patent Application Publication No. 2016-27093, for example, and suitably applied to the radical compound represented by the Chemical Formula 4.

Of these, a method using a diazonium salt obtained by diazotizing the amino group of an aniline compound as a starting material is preferable to obtain a surface-modified carbon having a high surface modification ratio with a small loss of the properties inherent to the carbonaceous material.

It is preferable to produce the radical compound represented by the Chemical Formula 4 from the diazonium salt represented by the following Chemical Formula 5.

### Diazonium Salt Represented by Chemical Formula 5

The diazonium salt is represented by the Chemical Formula 5 below.

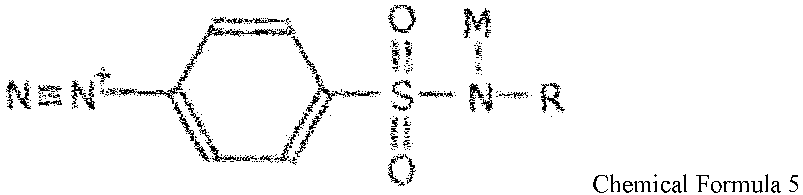

In the Chemical Formula 5, M represents a metal ion, an organic amine, or ammonium and R represents the following Chemical Formula 2 or the following Chemical Formula 3,

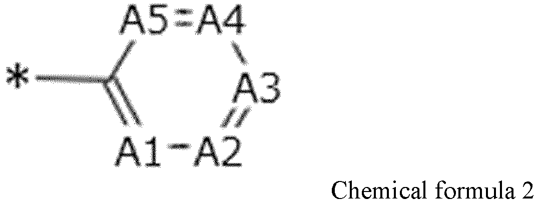

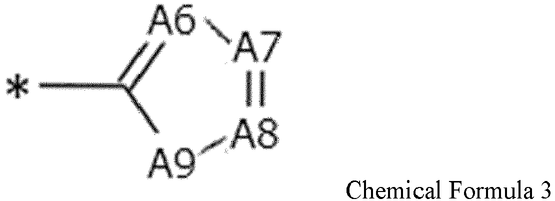

In the Chemical Formulae 2 and 3, A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

The metal ion, organic amine, and ammonium as M in the Chemical Formula 5 can be suitably selected according to the descriptions for the Chemical Formula 1.

he Chemical Formulas 2 and 3 can be suitably selected according to the descriptions for the Chemical Formula 1.

The aniline compound corresponding to the diazonium salt represented by the Chemical Formula 5 is not particularly limited and can be suitably selected to suit to a particular application. Specific examples include, but are not limited to, sulfapyridine, sulfadiazine, sulfamethoxazole, sulfathiazole, sulfaisoxazole, sulfamethizole, sulfamethazine, sulfamonomethoxine, sulfamethoxypyridazine, sulfalene, 4-amino-2,5-dimethoxy-N-phenylbenzenesulfonamide, sulfadimethoxine, sulfadoxine, and sulfadiazine.

### Liquid Composition

The liquid composition of the present disclosure contains the surface-modified carbon material of the present disclosure, an organic solvent of at least one of an aprotic polar solvent and an alcohol, preferably an active material, and other optional components.

The surface-modified carbon material is self-dispersive without an additional dispersant and uniformly dispersed in the liquid composition. The particles of the surface-modified carbonaceous material having a median size of from about 5 to about 5,000 nm are preferably floating or being suspended in the liquid composition. This preference can be evaluated by the method of measuring the median size of a surface-modified carbonaceous material mentioned above.

### Organic Solvent

The organic solvent mentioned above is not particularly limited and can be suitably selected to suit to a particular application as long as it is at least one of an aprotic polar solvent and an alcohol solvent.

Specific examples of the aprotic polar solvent include, but are not limited to, styrene, toluene, xylene, methyl ethyl ketone, ethyl acetate, acetone, N,N-dimethylformamide (DMF), N,N-dimethyl sulfoxide (DMSO), 2-pyrrolidone, N-methyl-2-pyrrolidone (NMP), tetrahydrofuran (THF), cyclohexanone, dimethylacetamide (DMAA), hexamethylphosphoric triamide (HMPA), acetonitrile, and dimethyl sulfone.

Specific examples of the alcohol solvent include, but are not limited to, methanol, ethanol, n-propanol, isopropanol (IPA), n-butanol, isobutanol, tert-butanol, n-pentanol, n-hexanol, and diacetone alcohol.

These can be used alone or in combination.

Of these, aprotic polar solvents such as N, N-dimethylformamide (DMF), N,N-dimethyl sulfoxide (DMSO), 2-pyrrolidone, N-methyl-2-pyrrolidone (NMP), dimethylacetamide (DMAA), hexamethylphosphoric triamide (HMPA), acetonitrile, and dimethyl sulfone are preferable because they are widely used in producing electrochemical devices and highly dissolve fluorine-based polymers.

### Active Material

The active material mentioned above is not particularly limited and can be suitably selected among known active materials to suit to a particular application. Specifically, it is suitable to select from active materials containing the positive electrode active material and negative electrode active materials, which are described later.

### Method of Manufacturing Liquid Composition

The liquid composition can be manufactured by dispersing and mixing the surface-modified carbonaceous material, the organic solvent, and other optional components such as a resin with a dispersing device.

Specific examples of the dispersing agent include, but are not limited to, a stirrer, a ball mill, a bead mill, a ring mill, a high-pressure disperser, a rotary high-speed shearing device, and an ultrasonic disperser.

### Container

The accommodating unit of the present disclosure contains a container containing the liquid composition of the present disclosure,

Specific examples of the container include, but are not limited to, a glass bottle, a plastic vessel, a plastic bottle, a stainless steel bottle, a 18-liter drum, and a drum.

### Electrode

The electrode of the present disclosure includes a current collector, an electrode mixture layer containing the surface-modified carbonaceous material, and other optional member such as a functional layer.

The electrode can be a positive or negative electrode.

FIG. 2 is a schematic diagram illustrating an embodiment of the electrode of the present disclosure.

In FIG, 2, an electrode 10 includes a current collector 1 and an electrode mixture layer 2 thereon.

### Positive Electrode

The positive electrode has a plane or sheet-like shape including a positive electrode current collector and a positive mixture layer made of a positive electrode material provided on the positive electrode current collector.

The positive electrode material contains a positive electrode active material and preferably a binder, a conductive assistant, and a thickening agent. It may contain other optional components.

### Positive Electrode Active Material

The positive electrode active material is not particularly limited and can be suitably selected to suit to a particular application as long as it can receive or release an alkali metal ion. One of the materials is an alkali metal-containing transition metal compound.

Specific examples include, but are not limited to, lithium-containing transition metal compounds such as composite oxides containing lithium and one or more elements selected from the group consisting of cobalt, manganese, nickel, chromium, iron and vanadium; and polyanionic compounds having an XO₄ tetrahedron (X is a substance such as P, S, As, Mo, W, and Si) in the crystal structure.

Specific examples of the lithium-containing transition metal compound include, but are not limited to, lithium cobaltate, lithium nickelate, and lithium manganate.

Of these, lithium-containing transition metal phosphate compounds such as lithium iron phosphate and lithium vanadium phosphate are preferable in terms of cyclability. Lithium vanadium phosphate is particularly preferable in terms of lithium diffusion coefficient and output properties.

As the polyanionic compound, a composite polyanionic compound having a surface coated with a conductive assistant of a material such as carbonaceous material is preferable in terms of electron conductivity.

### Binder and Thickening Agent

The binder binds positive electrode active materials or a positive electrode active material with a positive electrode current collector to maintain the electrode structure.

The material of the binder is not particularly limited and can be suitably selected to suit to a particular application.

Specific examples include, but are not limited to, fluorine-based binders, acrylate-based latexes, carboxymethyl cellulose (CMC), ethylene-propylene-butadiene rubber (EPBR), styrene-butadiene rubber (SBR), isoprene rubber, acrylate-based latexes, carboxymethyl cellulose (CMC), methyl cellulose, hydroxymethyl cellulose, ethyl cellulose, polyacrylic acid, polyvinyl alcohol, alginic acid, oxidized starch, starch phosphate, and casein. These can be used alone or in combination.

The fluorine-based binder is not particularly limited and can be suitably selected to suit to a particular application.

Specific examples include, but are not limited to, polyvinylidene fluoride and polytetrafluoro ethylene.

The binder is not particularly limited and can be suitably selected to suit to a particular application as long as it is stable to the solvent used in manufacturing and the voltage applied.

### Conductive Assistant

In the present disclosure, in addition to the surface-modified carbonaceous material, the following conductive assistant can be added.

The conductive assistant is dispersed in an electrode for reducing the resistance of the electrode. It enhances conductivity between the electrode materials and forms a conductive network.

The surface-modified carbonaceous material is treated as a conductive assistant at least as long as it plays a role of the conductive assistant even if the surface-modified carbonaceous material acts as something in addition to the role of the conductive assistant mentioned above. If the surface-modified carbonaceous material plays a role of inserting or releasing an alkali metal ion and is dispersed in an electrode to reduce the resistance of the electrode and enhance conductivity between the electrode materials, the surface-modified carbonaceous material is assumed to hold a dual role of an active material and a conductive assistant.

As the conductive assistant, using a metal material or a carbonaceous material in accordance with a positive electrode active material is preferable. These can be used alone or in combination.

The metal material for use in the conductive assistant is not particularly limited and can be suitably selected to suit to a particular application. Specific examples include, but are not limited to, copper and aluminum.

The conductive assistant for use in the conductive assistant is not particularly limited and can be suitably selected to suit to a particular application. Specific examples include, but are not limited to, conductive carbon black such as acetylene black and ketjen black produced by a method such as a furnace method, an acetylene method, and a gasification method; artificial graphite, natural graphite, graphene, carbon nanofiber, and carbon nanotube. Of these, acetylene black and ketjen black are preferable.

These conductive assistants can form a composite with an active material, thus enhancing conductivity.

### Positive Electrode Current Collector

The positive electrode current collector is not particularly limited and can be suitably selected to suit to a particular application as long as it has a size suitable for an electrical storage device.

The material of the positive electrode current collector is not particularly limited and can be suitably selected to suit to a particular application as long as it is formed of a conductive material and stable to the voltage applied.

Specific examples include, but are not limited to, nickel, aluminum, titanium, and tantalum. Of these, stainless steel and aluminum are preferable.

The type (shape and processed or not processed) of the positive electrode current collector is not particularly limited and can be suitably selected to suit to a particular application as long as the positive electrode current collector is durable in manufacturing a positive electrode, which is described later.

Specific examples of the positive electrode current collector include, but are not limited to, a plain foil, a perforated foil, an edged foil, a through foil, a protruding foil, and an expanded metal. Of these, a plain foil, a perforated foil, an edged foil, a through foil, and a protruding foil are preferable.

A coating foil on which a carbonaceous material used as the conductive assistant is applied on the positive electrode current collector in advance can be used as the positive electrode current collector. The carbonaceous material used as this coating layer can be the same as that used as the conductive assistant already mentioned in Conductive Assistant. Of these, acetylene black, ketjen black, artificial graphite, and natural graphite are preferable.

### Negative Electrode

The negative electrode has a plane or sheet-like shape including a negative electrode current collector and a negative mixture layer made of a negative electrode material provided on the negative electrode current collector.

The negative electrode material contains a negative electrode active material and preferably a binder, a conductive assistant, and a thickening agent. It may contain other optional components.

### Negative Electrode Active Material

The negative electrode active material is not particularly limited as long as it can receive or release an alkali metal ion. One example of the negative electrode active materials is a carbonaceous material containing graphite having a graphite crystal structure.

Specific examples of the carbonaceous material include, but are not limited to, natural graphite, artificial graphite, non-graphitizable carbon (hard carbonaceous material), and graphitizable carbon (soft carbonaceous material).

The negative electrode active material other than the carbonaceous material includes, but are not limited to, lithium titanate and titanium oxide.

Preferably, a high capacity material such as silicon, tin, a silicon alloy, a tin alloy, silicon oxide, silicon nitride, or tin oxide is used to enhance the energy density of an electrochemical device.

### Conductive Assistant

In addition to the surface-modified carbonaceous material, the following conductive assistant can be added.

The conductive assistant used for a negative electrode can be the same as that for a positive electrode mentioned above.

### Binder and Thickening Agent

The binder and the thickening agent for a negative electrode can be the same as those for a positive electrode.

The binder and the thickening agent are not particularly limited and can be suitably selected to suit to a particular application. Fluorine-containing binders, styrene-butadiene rubber (SBR), and carboxymethyl cellulose (CMC) are preferable.

### Negative Electrode Current Collector

The negative electrode current collector is not particularly limited and can be suitably selected to suit to a particular application.

The material of the negative electrode current collector is not particularly limited and can be suitably selected to suit to a particular application as long as it is formed of a conductive material and stable to the voltage applied. Specific examples include, but are not limited to, stainless steel, nickel, aluminum, and copper. Of these, copper is preferable.

The negative electrode current collector can take any form other than a flat plane-shape to suit to a particular application.

The size of the negative electrode current collector is not particularly limited and can be suitably selected to suit to a particular application as long as it has a size suitable for an electrical storage device.

### Other Optional Components

To the electrode mixture layer for use in the present disclosure, the following components can be added.

The other optional components are not particularly limited and can be suitably selected to suit to a particular application. They include, but are not limited to, dispersants, surfactants, pH regulators, corrosion inhibitors, preservatives and fungicides, chelate reagents, corrosion inhibitors, anti-oxidants, reduction inhibitors, evaporation accelerator, chelating agents, and metal nanoparticles.

The electrode layer in the present disclosure can be also formed by applying an electrode mixture layer to the current collector described later.

### Other Members

### Functional Layer

The electrode may have insulating particles on the electrode mixture layer to enhance heat resistance of an electrochemical element. The functional layer mentioned above can be a composite electrode mixture layer combined with the electrode mixture layer.

As the insulating particles, inorganic oxides are preferable. Of these, alumina and silica are preferable and alumina is particularly preferable to achieve good heat resistance. Conductivity particles can be applied to smooth the electrode mixture layer. As the conductive particles, carbon black, carbon nanofiber, carbon nanotube, graphene, and graphite powder are preferable. The surface-modified carbonaceous material of the present disclosure is more preferable to reduce or obviate the need for a dispersant.

### Device for Manufacturing Electrode and Method of Manufacturing Electrode

The device for manufacturing the electrode of the present disclosure includes the accommodating unit of the present disclosure, a device for applying the liquid composition of the present disclosure accommodated in the accommodating unit to a target, and other optional devices.

The method of manufacturing the electrode of the present disclosure includes applying the liquid composition of the present disclosure mentioned above and other optional processes.

### Device for Applying and Applying

The device for applying applies the liquid composition accommodated in the accommodating unit to a target.

In the applying, the liquid composition is suitably applied to a target with the device for applying.

By this application, the liquid composition is applied to a current collector to form a liquid composition layer.

The target is not particularly limited and can be suitably selected to suit to a particular application. Specific examples include, but are not limited to, a current collector (electrode substrate) and an active material layer.

The device for applying and the applying are not particularly limited and can be suitably selected to suit to a particular application. The applying is conducted with the device for applying by methods such as a dip coating method, a spray coating method, a spin coating method, a bar coating method, a slot die coating method, a doctor blade coating method, an offset printing method, a gravure printing method, a flexo printing method, a letterpress printing method, a screen printing method, an inkjet method, and an electrophotographic printing method using a liquid developing method.

Of these, the device for applying and the applying by inkjetting are preferable to precisely control the position of liquid discharging. The electrode mixture layer can be formed by the following method but the method of manufacturing an electrode mixture layer is not limited thereto.

### Other Optional Member and Other Optional Process

The other optional members of the device for manufacturing an electrode is not particularly limited and can be suitably selected to suit to a particular application unless it has an adverse impact on the effects of the present disclosure. It includes, for example, a heating device.

The other optional process relating to the method of manufacturing an electrode is not particularly limited and can be suitably selected to suit to a particular application unless it has an adverse impact on the effects of the present disclosure. It includes, for example, heating.

### Device for Heating and Heating

The device for heating heats the liquid composition applied with the device for applying.

In the heating, the liquid composition applied in the applying is heated.

The liquid composition layer can be dried by the heating.

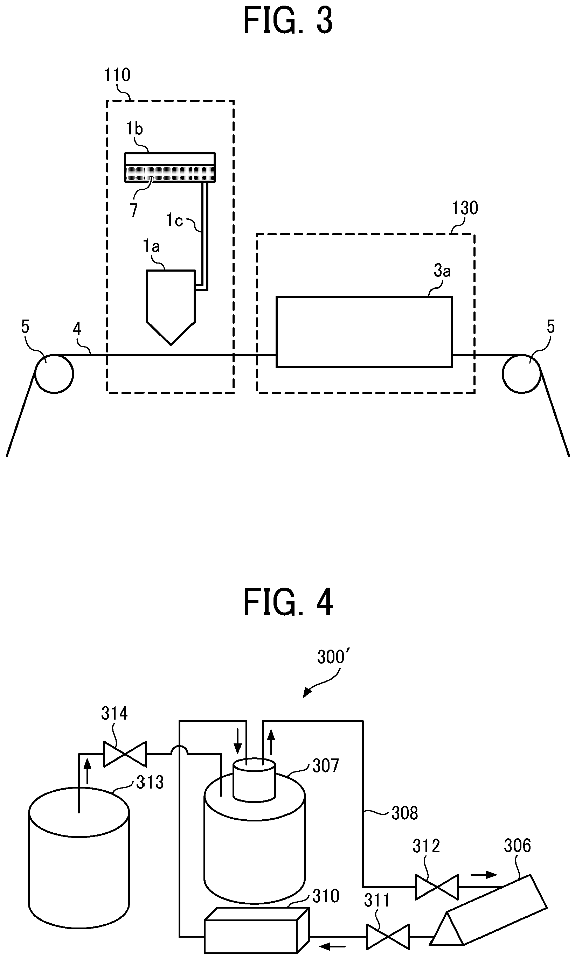

FIG. 3 is a schematic diagram illustrating an example of a device (liquid discharging device) for manufacturing an electrode to execute the method of manufacturing the electrode according to the present embodiment.

The device for manufacturing an electrode is to manufacture an electrode using a liquid composition containing the surface-modified carbonaceous material mentioned above. The device for manufacturing an electrode includes a discharging unit 110 for applying a liquid composition 7 to a print substrate 4 having a target to form a liquid composition layer and a heating unit 130 for heating the liquid composition layer to obtain an electrode mixture layer. The device for manufacturing an electrode includes a conveyor unit 5 that conveys the print substrate 4 through the discharging unit 110 and the heating unit 130 in this sequence at a preset speed.

The method of manufacturing the print substrate 4 having a target for discharging such as the active material layer mentioned above is not particularly limited. The print substrate 4 can be manufactured by a known method.

The discharging unit 110 includes a print device 1a as an example of the device for applying that applies the liquid composition 7 onto the print substrate 4, an accommodating unit 1b that contains the liquid composition 7, and a supply tube 1c that supplies the liquid composition 7 in the accommodating unit 1b to the print device 1a.

The accommodating unit 1b accommodates the liquid composition 7. The discharging unit 110 discharges the liquid composition 7 from the print device 1a to apply the liquid composition 7 onto the print substrate 4 to form a thin film-like liquid composition layer. The accommodating unit 1b may be configured and integrated with a device for manufacturing an electrode. Alternatively, it can be configured removable from the device for manufacturing an electrode. In addition, the accommodating unit 1b may be configured to add the liquid composition 7 to an accommodating unit integrated with a device for manufacturing an electrode or an accommodating unit detachable from a device for manufacturing an electrode.

The accommodating unit 1b and the supply tube 1c can be arbitrarily selected as long as the liquid composition 7 can be stably stored and supplied.

As illustrated in FIG. 3, the heating unit 130 includes a heater 3a. The heater 3a heats and dries a solvent remaining in the liquid composition layer to remove it. An electrode mixture layer is thus formed. The heating unit 130 may remove the solvent under a reduced pressure.

The heating unit 3a is not particularly limited and can be suitably selected to suit to a particular application. It includes, but is not limited to, a substrate heater, an IR heater, a heated wind heater, and a combination thereof.

Further, the heating temperature and the heating time can be appropriately selected according to the boiling point of the solvent contained in the liquid composition 7 and the thickness of formed film.

FIG. 4 is a schematic diagram illustrating another example of a device (liquid discharging device) for manufacturing an electrode for executing the method of manufacturing the electrode according to the present embodiment.

A liquid discharging device 300' circulates a liquid composition in a liquid discharging head 306, a tank 307, and a tube 308 by adjusting a pump 310 and valves 311 and 312.

The liquid discharging device 300' includes an external tank 313. The liquid composition can be supplied to the tank 307 from the external tank 313 by adjusting the pump 310 and the valves 311, 312, and 314 when the liquid composition in the tank 307 decreases. The liquid composition can be discharged to the target position on a target with the device for manufacturing an electrode.

The electrode can be used as a part of the configuration of an electrochemical element, for example.

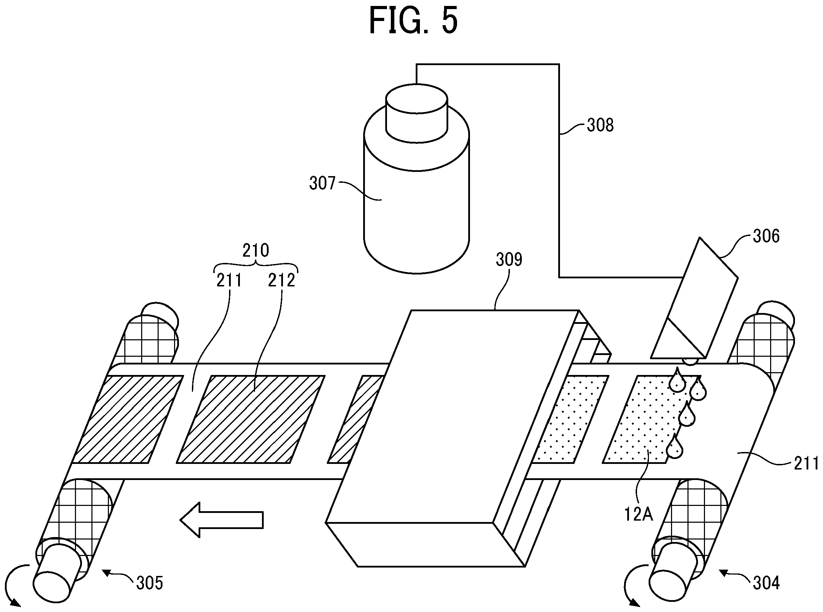

FIG. 5 is a diagram illustrating another example of the method of manufacturing an electrode according to the present embodiment.

The method of manufacturing an electrode 210 includes sequentially discharging a liquid composition 12A onto the electrode substrate 211 using the liquid discharging device 300'.

First, the electrode substrate 211 prepared has a long and thin shape. The electrode substrate 211 is wound around a tubular core. A feeding roller 304 and a reeling roller 305 are disposed in order to form the electrode mixture layer 212 on the upper surface in FIG. 5. The feeding roller 304 and the reeling roller 305 rotate counterclockwise to convey the electrode substrate 211 from the right to left in FIG. 5. The liquid discharging head 306 disposed above the electrode substrate 211 between the feeding roller 304 and the reeling roller 305 discharges liquid droplets of the liquid composition 12A onto the electrode substrate 211 sequentially conveyed in the same manner as illustrated in FIG. 3.

Two or more of the liquid discharging heads 306 can be positioned in the direction substantially parallel or perpendicular to the conveyance direction of the electrode substrate 211. Next, the electrode substrate 211 onto which the liquid droplets of the liquid composition 12A are discharged is conveyed to a heating mechanism 309 by the feeding roller 304 and the reeling roller 305. As a result, the electrode mixture layer 212 is formed to obtain an electrode 210. Thereafter, the electrode 210 is cut to a desired size by processing, such as punching.

The heating mechanisms 309 can be disposed either above or below the electrode substrate 211 or two or more of the heating mechanisms 309 may be disposed.

The heating mechanism 309 is not particularly limited unless it contacts the liquid composition 12A in a direct manner. It includes, but is not particularly limited to, a resistance heater, an infrared heater, and a fan heater. Two or more of the heating mechanism 309 can be disposed. A device for curing utilizing ultraviolet can be also disposed for polymerization.

In addition, the liquid composition 12A discharged to the electrode substrate 211 is preferably heated at the stage or with a heating mechanism other than the stage. The heating mechanism 309 can be disposed either above or below the electrode substrate 211 or two or more of the heating mechanisms 309 may be disposed.

The heating temperature is not particularly limited. The liquid composition 12A dries by heating, thereby forming an electrode mixture layer. If the liquid composition 12A contains a binder precursor, the liquid composition 12A is preferably heated at the temperature at which the binder precursor is polymerized. That temperature is preferably from 70 to 150 degrees C in terms of the energy used. Ultraviolet can be used to irradiate the liquid composition 12A discharged onto the electrode substrate 211.

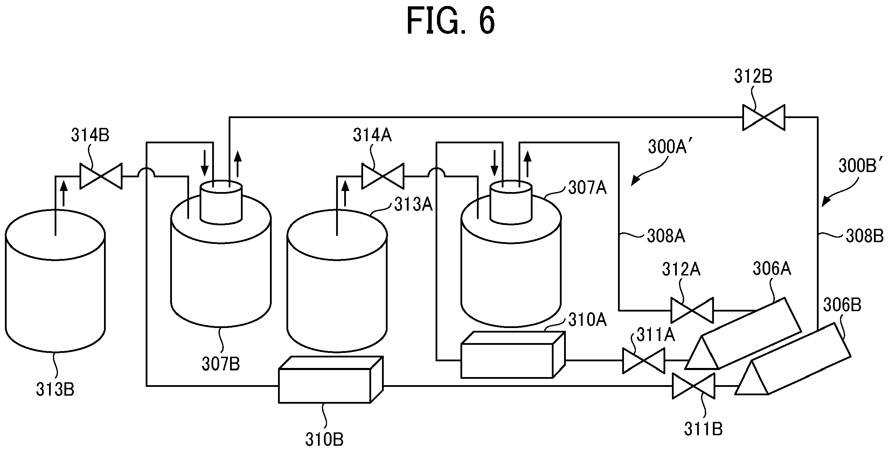

As illustrated in FIG. 6, a tank 307A may supply a liquid composition from tanks 313A connected to the tank 307A. A liquid discharging head 306 may include a liquid discharging head 306A and a liquid discharging head 306B.

The method of manufacturing an electrochemical element can be suitably selected from any known method as long as the electrode mixture layer is of the present disclosure.

### Method of Manufacturing Positive Electrode

One way of manufacturing a positive electrode is to apply a positive electrode active material slurry with optional components such as a binder, a thickening agent, a conductive assistant, and a solvent to a positive electrode current collector followed by drying.

The solvent is not particularly limited and can be suitably selected to suit to a particular application. Specific examples include, but are not limited to, an aqueous solvent such as water and alcohol, and an organic solvent such as N-methyl-2-pyrrolidone (NMP), toluene, and anisole.

The active material is subjected to roll molding to obtain a sheet electrode or to compression molding to obtain a pellet electrode.

### Method of Manufacturing Negative Electrode

One way of manufacturing a negative electrode is to apply a negative electrode active material slurry with optional components such as a binder, a thickening agent, a conductive assistant, and a solvent to a negative electrode current collector followed by drying.

A negative electrode can be manufactured by subjecting a negative electrode material slurry to roll molding to obtain a sheet electrode or compression molding to obtain a pellet electrode. Alternatively, it is possible to form a thin film of a negative electrode active material on a negative electrode current collector by vapor deposition, sputtering, or plating.

The solvent used for manufacturing a negative electrode can be the same as that for manufacturing a positive electrode.

### Variation of Printing Unit

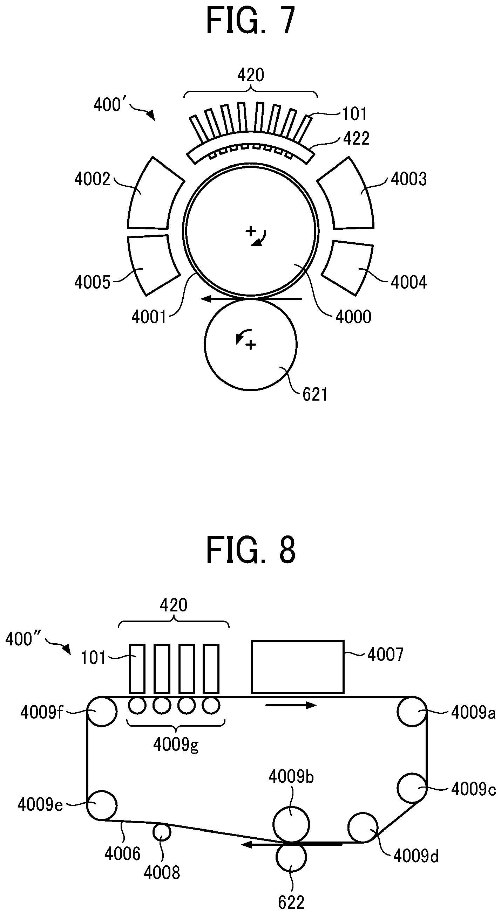

The device for manufacturing (liquid discharging device) an electrode illustrated in FIG. 3 directly applies the liquid composition discharged from the print device 1a as a device for applying to the print substrate 4. This device may apply a liquid composition to a substrate via transfer. This transfer method is described with reference to FIGS. 7 and 8.

FIGS. 7 and 8 are diagrams illustrating variations of the print device. FIG. 7 is a diagram illustrating a print device using a drum intermediate. FIG 8 is a diagram illustrating a print device using an endless belt intermediate.

A print unit 400' illustrated in FIG. 7 transfers a liquid composition containing a surface-modified carbonaceous material to a substrate via an intermediate transfer member 4001 to form a layer containing the surface-modified carbonaceous material on the surface of the substrate by inkjetting.

The printing unit 400' includes an inkjet unit 420, a transfer drum 4000, a pre-processing unit 4002, an absorption unit 4003, a heating unit 4004, and a cleaning unit 4005.

The inkjet unit 420 includes a head module 422 holding multiple heads 101. The heads 101 discharge a liquid composition to the intermediate transfer member 4001 supported by the transfer drum 4000 to form a liquid composition layer containing the surface-modified carbonaceous material on the intermediate transfer member 4001. Each of the heads 101 is a line head. The nozzles thereof are disposed to cover the width of the printing region of a usable maximum substrate.

The heads 101 include a nozzle surface on which the nozzles are formed. The nozzle surface faces the surface of the intermediate transfer member 4001 with a tiny gap therebetween. In the present embodiment, the intermediate transfer member 4001 is configured to move circularly on a circular orbit. The heads 101 are thus radially positioned.

The transfer drum 4000 faces an impression cylinder 621 and forms a transfer nip. The pre-processing unit 4002 may apply a reaction liquid to the intermediate transfer member 4001 to increase viscosity of a liquid composition before the heads 101 discharge the liquid composition. The absorption unit 4003 absorbs the liquid composition from the liquid composition layer on the intermediate transfer member 4001 before transferring.

The absorption unit 4003 may include a heating unit 4004. The heating unit 4004 heats the liquid composition layer on the intermediate transfer member 4001 before transferring. The resin in the heated liquid composition layer is melted, thus enhancing transferability of the liquid composition layer to a substrate. The cleaning unit 4005 cleans the surface of the intermediate transfer member 4001 after transferring and removes the liquid composition and impurities such as dusts remaining on the intermediate transfer member 4001.

The impression cylinder 621 is pressed against the intermediate transfer member 4001. The liquid composition layer on the intermediate transfer member 4001 is transferred to the substrate when the substrate passes the transfer nip between the impression cylinder 621 and the intermediate transfer member 4001. The impression cylinder 621 can be configured to include at least one gripping mechanism for holding the front end of the substrate on its outer surface.

A print unit 400" illustrated in FIG. 8 transfers a liquid composition containing a surface-modified carbonaceous material to a substrate via an intermediate transfer belt 4006 to form a layer containing the surface-modified carbonaceous material on the surface of the substrate by inkjetting.

The printing unit 400" discharges liquid droplets of the liquid composition containing the surface-modified carbonaceous material from the heads 101 of the inkjet unit 420 to form a liquid composition layer containing the surface-modified carbonaceous material on the outer surface of the intermediate transfer belt 4006. The heating unit 4007 dries the liquid composition layer formed on the intermediate transfer belt 4006, which forms film of the liquid composition layer on the intermediate transfer belt 4006.

The filmed liquid composition layer on the intermediate transfer belt 4006 is transferred to the substrate at the transfer nip formed between the intermediate transfer belt 4006 and a transfer roller 622. A cleaning roller 4008 cleans the surface of the intermediate transfer belt 4006 after this transfer.

The intermediate transfer belt 4006 is stretched by a driving roller 4009a, a facing roller 4009b, multiple (four in this embodiment) shape maintaining rollers, 4009c, 4009d, 4009e, and 4009f, and multiple (four in this embodiment) supporting rollers 4009g. The intermediate transfer belt 4006 moves in the direction indicated by the arrow in FIG. 7. The supporting rollers 4009g disposed facing the heads 101 maintain the tension of the intermediate transfer belt 4006 when the heads 101 discharge the liquid composition containing the surface-modified carbonaceous material.

The liquid composition layer formed on the intermediate transfer member 4001 illustrated in FIG. 7 and the intermediate transfer belt 4006 illustrated in FIG. 8 is not necessarily a single layer. The liquid composition can be changed per multiple head 101 to form two or more layers at one pass.

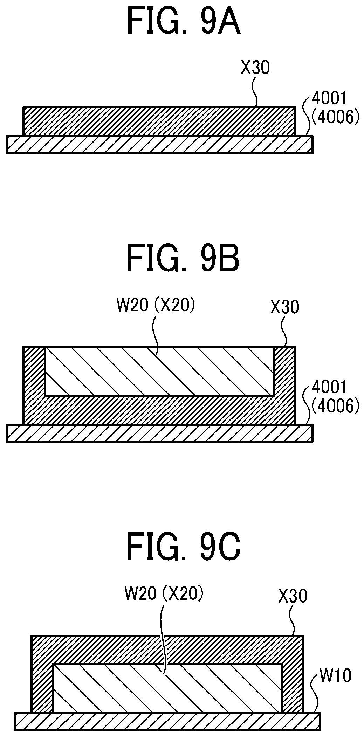

In such a configuration, a first layer W20 (X20) and a second layer X30 can be formed on a target W10 in manufacturing processes 1 to 3 of the method of manufacturing an electrode of the present embodiment (FIG. 9).

Regarding the intermediate transfer, the top and the bottom of the liquid composition layer are reversed when the liquid composition layer is finally transferred to the target W10. In the process 1, the liquid composition is applied to the intermediate transfer member 4001 (intermediate transfer belt 4006) using the head 101 for discharging the liquid composition for a second layer to form a second layer X30 on the intermediate transfer member 4001 (intermediate transfer belt 4006).

In the process 2, the liquid composition for the first layer and the liquid composition for the second layer are applied to the intermediate transfer member 4001 (intermediate transfer belt 4006). Moreover, the first layer W20 (X20) and the second layer X30 are formed on the second layer X30 on the intermediate transfer member 4001 (intermediate transfer belt 4006).

The first layer W20 (X20) and the second layer X30 in the process 2 can be formed with a single head capable of discharging the liquid composition for the first layer and the liquid composition for the second layer in a single process. These layers can also be formed with a head for discharging the liquid composition for the first layer and another head for discharging the liquid composition for the second layer in two processes.

The liquid composition layer formed on the intermediate transfer member 4001 (intermediate transfer belt 4006) is transferred from the intermediate transfer member 4001 (intermediate transfer belt 4006) to the target W10 in the process 3. The first layer W20 (X20) and the second layer X30 are formed on the target W10 through the processes described above in the intermediate transfer method.

### Variation of Liquid Discharging Head

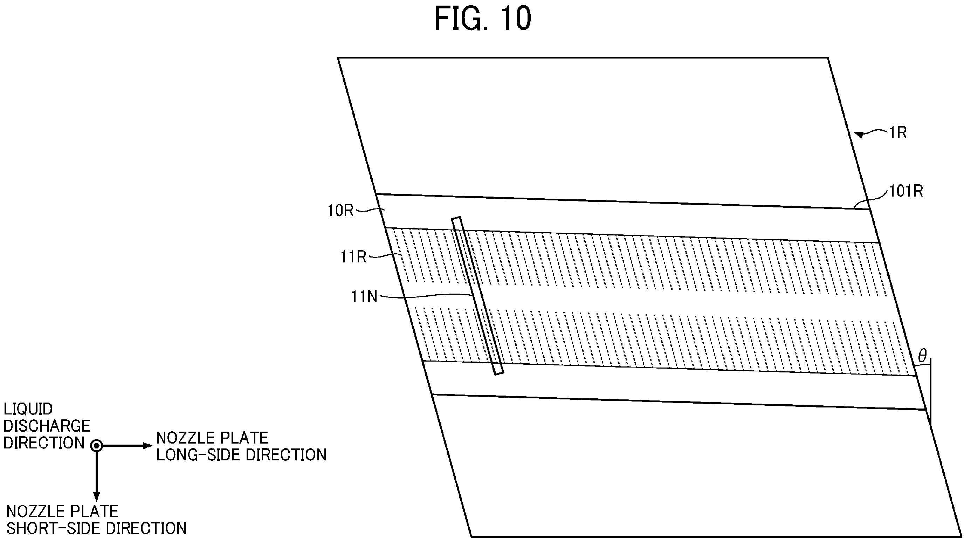

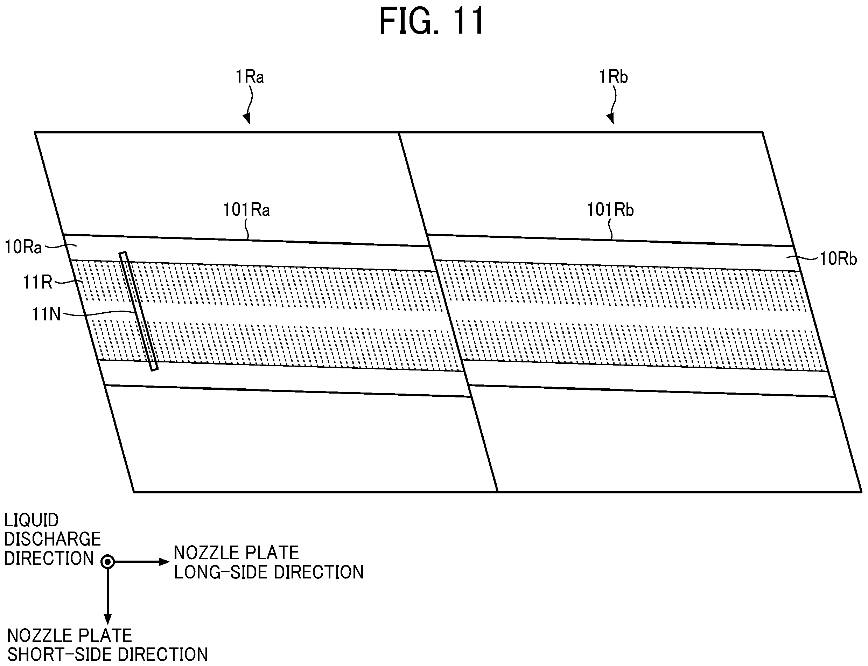

The device for manufacturing an electrode mentioned above includes heads 101 including a nozzle plate with a nozzle surface, where nozzles are formed, having a rectangle shape. The nozzle plate may take a shape of a trapezoid, a rhombus, or a parallelogram other than a rectangle. Examples of a head with a parallelogram-shaped nozzle plate are described with reference to FIGS. 10 and 11.

FIG. 10 is a diagram illustrating a variation of a liquid discharging head. FIG. 11 is a diagram illustrating the case where there are multiple liquid discharging heads illustrated in FIG. 10.

A head 1R has an outline (ridge line) slanted at an angle θ against the short-side direction of the nozzle plate. A liquid discharge portion 101R and a nozzle plate 10R of the head 1R are also formed in a shape along this ridge line. The liquid discharging portion 101R includes the nozzle plate 10R having an outline shape of a parallelogram. The nozzle plate 10R has a plurality of nozzles 11R regularly arranged in a two dimensional manner.

One way of arranging the nozzles 11R is to create multiple lines 11N each line having N of nozzles 11R in parallel to the ridge line mentioned above in the long-side direction of the nozzle plate crossing the short-side direction of the nozzle plate at a right angle.

In the head 1R configured as described above, multiple heads 1Ra and 1Rb as illustrated in FIG. 11 can be arranged in a single line along the longitudinal direction. A line head having a desired length can be obtained corresponding to the width of the printing region of a substrate to be used.

### Electrochemical Element

The electrochemical element of the present disclosure includes the electrode of the present disclosure and other optional members.

The electrode can be a positive or negative electrode.

The electrochemical element generally includes a positive electrode, a negative electrode, an electrolyte, and a separator for holding the electrolyte between the positive electrode and the negative electrode.

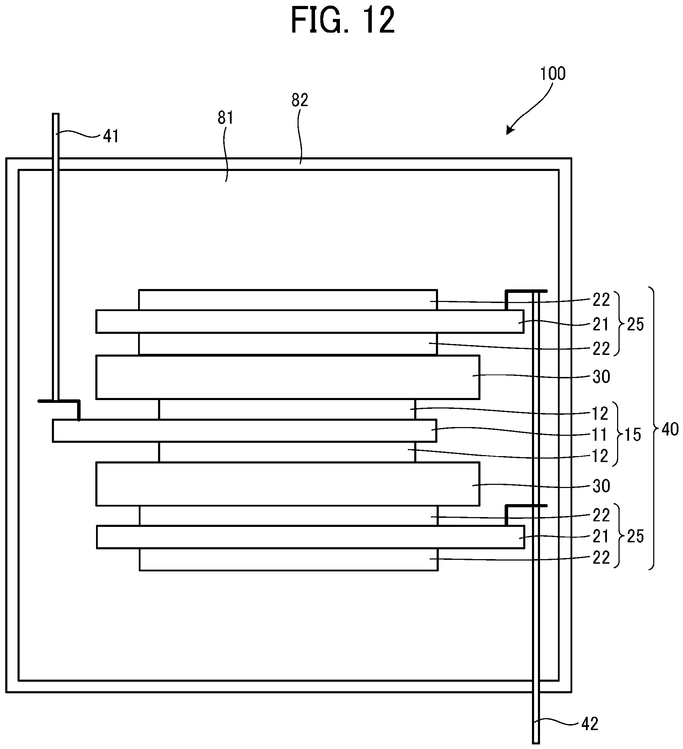

FIG. 12 is a diagram illustrating an example of the electrochemical device of the present disclosure.

An electrochemical element 100 includes an electrochemical element cell 40 in which an electrolyte 81 made of an electrolyte aqueous solution or a non-aqueous electrolyte is formed, being sealed with a sealing vessel 82. In the electrochemical element 100, lead wires 41 and 42 are led out to the outside of the sealing vessel 82.

In an electrochemical element cell 40, a positive electrode 15 and a negative electrode 25 are laminated with a separator 30 therebetween. The negative electrode 25 is disposed on both sides of the positive electrode 15. The lead wire 41 is connected to a positive current collector 11 and the lead wire 42 is connected to a negative electrode current collector 21.

The negative electrode 25 includes a negative electrode mixture layer 22 formed on both sides of the negative electrode current collector 21. Optionally, a first insulating layer 24 is formed on the negative electrode mixture layer 22. Optionally, the negative electrode mixture layer 22 and the first insulating layer 24 are covered with a second insulating layer 26.

The negative electrode mixture layer 22 can be formed by applying a liquid composition for forming a positive electrode mixture layer.

A liquid composition for forming a negative electrode mixture layer contains an active material, a dispersion medium, and optionally, a conductive assistant and a dispersant.

The liquid composition for forming a negative electrode mixture layer can be applied by a comma coater method, a die coating method, a curtain coating method, a spray coating method, or a liquid discharging method.

The positive electrode 15 includes the positive electrode mixture layer 12 formed on both sides of the positive electrode current collector 11.

The negative electrode mixture layer 12 can be formed by applying a liquid composition for forming a positive electrode mixture layer.

A liquid composition for forming a positive electrode mixture layer contains an active material, a dispersion medium, and optionally, a conductive assistant and a dispersant.

The liquid composition for forming a positive electrode mixture layer can be applied by a comma coater method, a die coating method, a curtain coating method, a spray coating method, or a liquid discharging method.

### Current Collector

In the present specification, the current collector is a highly conductive material. Typically, aluminum is used for a positive electrode while copper is used for a negative electrode. The current collector in the present specification is not limited to those materials. So called carbon coated metal substrate is preferably used.

The number of the laminates of the positive electrodes 15 and the negative electrodes 25 of the electrochemical element cell 40 is not particularly limited.
The number of the positive electrode 15 and the negative electrode 25 of the electrochemical element 40 can be the same or different.

The electrochemical element 100 may optionally include other components.

The shape of the electrochemical element 100 is not particularly limited.

Examples include, but are not limited to, a laminate shape, a cylindrical shape in which a sheet electrode and a separator are formed in a spiral manner, a cylindrical shape having an inside-out structure in which a pellet electrode and a separator are combined, and a coin shape in which a pellet electrode and a separator are stacked.

Specific examples of the electrochemical element 100 include, but are not limited to, aqueous electrical storage element.

### Separator

The separator 30 is optionally disposed between the negative electrode 25 and the positive electrode 15 to prevent a short circuit therebetween.

Specific examples of the separator 30 include, but are not limited to, paper such as kraft paper, vinylon mixed paper, and synthetic pulp mixed paper, cellophane, polyolefin nonwoven fabric such as polyethylene graft membrane and polypropylene melt blown nonwoven fabric, polyamide nonwoven fabric, and glass fiber nonwoven fabric, and micropore membrane.

The size of the separator 30 is not particularly limited as long as it can be used for an electrochemical element.

The separator 30 may employ a single layer or laminate configuration.

A solid electrolyte used as a non-aqueous electrolyte can obviate the need for the separator 30.

### Electrolyte Aqueous Solution

Specific examples of the electrolyte salt constituting an electrolyte aqueous solution include, but are not limited to, sodium hydroxide, potassium hydroxide, sodium chloride, potassium chloride, ammonium chloride, zinc chloride, zinc acetate, zinc bromide, zinc ionide, zinc tartarate, and zinc perchlorate.

### Non-aqueous Electrolyte

A solid electrolyte or a non-aqueous liquid electrolyte can be used as the non-aqueous electrolyte.

In the non-aqueous liquid electrolyte, an electrolyte salt is dissolved in a non-aqueous solvent.

### Non-aqueous Solvent

The non-aqueous solvent is not particularly limited. It is preferable to use a non-protic organic solvent.

The aprotic organic solvent includes a carbonate-based organic solvent such as a chain carbonate or a cyclic carbonate. Of these, chain carbonates are preferable because they are highly capable of dissolving an electrolyte salt.

The aprotic organic solvent preferably has low viscosity.

Specific examples of the chain carbonate include, but are not limited to, dimethyl carbonate (DMC), diethyl carbonate (DEC), and methylethyl carbonate (EMC).

The proportion of the chain carbonate in a non-aqueous solvent is preferably 50 percent by mass or greater. A proportion of the chain carbonate in a non-aqueous solvent of 50 percent by mass or greater reduces the proportion of cyclic materials even if they are cyclic materials other than the chain carbonate such as cyclic carbonates or esters with a high dielectric constant in a non-aqueous solvent. In this range of proportion, viscosity of a non-aqueous electrolyte is low even when the non-aqueous electrolyte has a concentration as high as 2M or greater, which helps the non-aqueous electrolyte penetrate the electrode and enhances ion diffusion.

Examples of the cyclic carbonate include, but are not limited to, propylene carbonate (PC), ethylene carbonate (EC), butylene carbonate (BC), and vinylene carbonate (VC).

Examples of the non-aqueous solvent other than the carbonate-based organic solvent include, but are not limited to, ester-based organic solvents such as cyclic esters and chain esters and ether-based organic solvents such as cyclic ethers and chain ethers.

Examples of the cyclic ester include, but are not limited to, γ-butyrolactone (γBL), 2-methyl-γ-butyrolactone, acetyl-γ-butyrolactone, and γ-valerolactone.

Examples of the chain ester include, but are not limited to, an ester of alkyl propionate, an ester of dialkyl malonate, an ester of alkyl acetate (e.g., methyl acetate (MA) and ethyl acetate), and an ester of alkyl formate (e.g., methyl formate (MF) and ethyl formate).

Examples of the cyclic ether include, but are not limited to, tetrahydrofuran, alkyltetrahydrofuran, alkoxytetrahydrofuran, dialkoxytetrahydrofuran, 1,3-dioxolane, alkyl-1,3-dioxolane, and 1,4-dioxolane.

Examples of the chain ether include, but are not limited to, 1,2-dimethoxyethane (DME), diethyl ether, ethylene glycol dialkyl ether, diethylene glycol dialkyl ether, triethylene glycol dialkyl ether, and tetraethylene glycol dialkyl ether.

### Electrolyte Salt

The electrolyte salt is not particularly limited as long as the electrolyte salt has a high degree of ion conductivity and can be dissolved in a non-aqueous solvent.

The electrolyte salt preferably contains a halogen atom.

One of the cations constituting an electrolyte salt is a lithium ion.

Examples of anions constituting an electrolytic salt include, but are not limited to, BF₄⁻, PF₆⁻, AsF₆⁻, CF₃SO₃⁻, (CF₃SO₂)₂N⁻, and (C₂F₅SO₂)₂N⁻.

Specific examples of the lithium salts include, but are not limited to, lithium hexafluorophosphate (LiPF₆), lithium fluoroborate (LiBF₄), lithium hexafluoroarsenate (LiAsF₆), lithium trifluoromethasulfonate (LiCF₃SO₃), lithium bis(trifluoromethylsulfonyl)imide (LiN (C₃SO₂)₂), and lithium bis (pentafluoroethylsulfonyl)imide (LiN(C₂F₅SO₂)₂). Of these, LiPF₆ is preferable in terms of ion conductivity and LiBF₄ is preferable in terms of stability.

Those electrolyte salts can be used alone or in combination.

The concentration of the electrolyte salt in a non-aqueous electrolyte is not particularly limited and can be suitably selected to suit to a particular application. This concentration is preferably from 1 to 2 mol/L when a non-aqueous storage element is of a swing type. The concentration is preferably from 2 to 4 mol/L when a non-aqueous storage element is of a reserve type.

### Application of Surface-modified Carbonaceous Material

The application of the surface-modified carbonaceous material is not particularly limited and can be suitably selected to suit to a particular application. Specific examples include, but are not limited to, the application of forming an electrode mentioned above and three-dimensional fabrication (3D printing).

In three dimensional fabrication including 3D printing such as an SLS method, an SMS method, an FDM method, a multi jet fusion (MJF) method, or a binder jetting (BJ) method, the surface-modified carbonaceous material can be used as additives added to the liquid composition for three dimensional fabrication for color tone adjustment and strength reinforcement. By using the surface-modified carbon material according to the present embodiment, it is possible to reduce the occurrence of various problems caused by the presence of the dispersant in three dimensional fabrication.

Therefore, the surface-modified carbon material of the present disclosure can also be applied to a liquid composition for three dimensional fabrication containing the surface-modified carbon material of the present disclosure, an accommodating unit for three dimensional fabrication containing the liquid composition for three dimensional fabrication, a three dimensional fabrication apparatus and a three dimensional fabrication method using the liquid composition for three dimensional fabrication, and a three dimensional fabrication object containing the surface-modified carbon material.

### Application of Electrochemical Element

The application of the electrochemical device is not particularly limited.

Examples include, but are not limited to: vehicles; and electric devices, such as mobile phones, notebook computers, pen-input personal computers, mobile personal computers, electronic book players, cellular phones, portable facsimiles, portable copiers, portable printers, headphone stereos, video movies, liquid crystal televisions, handy cleaners, portable compact discs (CDs), minidiscs, transceivers, electronic notebooks, calculators, memory cards, portable tape recorders, radios, backup power supplies, motors, lighting devices, toys, game machines, watches, strobes, and cameras. Of these, vehicles and electric devices are particularly preferable.

The vehicles include, but are not limited to, ordinary vehicles, heavy special cars, small special vehicles, trucks, dump trucks, heavy motorcycles, and ordinary motorcycles.

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

The present disclosure is described in detail with reference to Examples but are not limited thereto.

### Example 1-1

### Manufacturing of Surface-modified Carbonaceous Material 1

A total of 18 parts of furnace black (LITX 300, primary particle diameter of 20 nm, BET value of 160 m²g⁻¹, manufactured by Cabot Corporation) as a carbonaceous material was placed in 320 parts of deionized water for one hour-stirring at room temperature. After stirring, 1.5 parts of sulfathiazole (manufactured by Tokyo Chemical Industry Co., Ltd.) as an aniline compound and 0.7 parts of lithium nitrite (manufactured by Mitsuwa Chemical Co., Ltd.) were added once every four hours and the mixture was adjusted to pH 2.5 with hydrogen chloride followed by stirring. This procedure was repeated four times. After the fourth addition, the mixture was subjected to four-hour stirring. After stirring, the mixture was subjected to centrifugal followed by removing supernatant to obtain a residual. The residual was re-dispersed with deionized water four times to obtain a first liquid dispersion. The first liquid dispersion obtained was adjusted with 7 normal lithium hydroxide aqueous solution was adjusted to a pH of 10 followed by stirring. After stirring, the mixture was subjected to centrifugal followed by removing the supernatant to obtain a residual. The residual was re-dispersed with deionized water three times to obtain a second liquid dispersion. The second liquid dispersion obtained was subjected to centrifugal followed by removing the supernatant to obtain a residual. The residual was dried with a vacuum drier to obtain a target surface-modified carbonaceous material 1 of Example 1-1 in which the substituent represented by the Chemical Formula 1 was added to the carbonaceous material.

As represented in the Chemical Reaction 1 below, in manufacturing the surface-modified carbonaceous material 1, the sulfathiazole (compound a) as an aniline compound is diazotized using nitrous acid to obtain a compound b represented by the Chemical Formula 5 as a diazonium salt. The compound b is radicalized to obtain a compound c represented by the Chemical Formula 4 as a radical compound. The compound c is covalently bonded to the edge of the graphene structure of furnace black as a carbonaceous material to obtain the surface-modified carbon material 1 in which the substituent d represented by the Chemical Formula 1 is added to the carbonaceous material. In the Chemical Reaction, ■ represents a radical and * represents the binding site to the carbonaceous material. 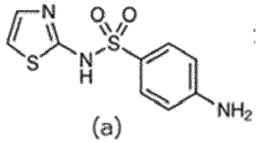 diazotized 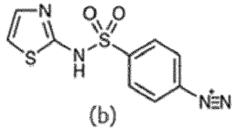 Radicalized 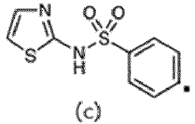 bonding to carbonaceous material 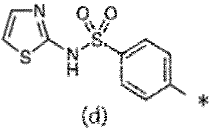 Chemical Reaction

### Example 1-2

The surface-modified carbonaceous material 2 of Example 1-2 in which the substituent was added to the carbonaceous material was obtained in the same manner as in Example 1-1 except that sulfathiazole (manufactured by TOKYO CHEMICAL INDUSTRY CO., LTD.) was changed to sulfamethizole (manufactured by TOKYO CHEMICAL INDUSTRY CO., LTD.).

### Example 1-3

The surface-modified carbonaceous material 3 of Example 1-3 in which the substituent was added to the carbonaceous material was obtained in the same manner as in Example 1-1 except that sulfathiazole (manufactured by TOKYO CHEMICAL INDUSTRY CO., LTD.) was changed to sulfamethoxazole (manufactured by TOKYO CHEMICAL INDUSTRY CO., LTD.).

### Example 1-4

The surface-modified carbonaceous material 4 of Example 1-4 in which the substituent was added to the carbonaceous material was obtained in the same manner as in Example 1-1 except that sulfathiazole (manufactured by TOKYO CHEMICAL INDUSTRY CO., LTD.) was changed to sulfadiazine (manufactured by TOKYO CHEMICAL INDUSTRY CO., LTD.).

### Example 1-5

The surface-modified carbonaceous material 5 of Example 1-5 in which the substituent was added to the carbonaceous material was obtained in the same manner as in Example 1-1 except that sulfathiazole (manufactured by TOKYO CHEMICAL INDUSTRY CO., LTD.) was changed to sulfapiridine (manufactured by TOKYO CHEMICAL INDUSTRY CO., LTD.).

### Example 1-6

The surface-modified carbonaceous material 6 of Example 1-6 in which the substituent was added to the carbonaceous material was obtained in the same manner as in Example 1-1 except that sulfathiazole (manufactured by TOKYO CHEMICAL INDUSTRY CO., LTD.) was changed to sulfamethazine (manufactured by TOKYO CHEMICAL INDUSTRY CO., LTD.).

### Example 1-7

The surface-modified carbonaceous material 7 of Example 1-7 in which the substituent was added to the carbonaceous material was obtained in the same manner as in Example 1-1 except that sulfathiazole (manufactured by TOKYO CHEMICAL INDUSTRY CO., LTD.) was changed to sulfamonomethoxine (manufactured by TOKYO CHEMICAL INDUSTRY CO., LTD.).

### Example 1-8

The surface-modified carbonaceous material 8 of Example 1-8 in which the substituent was added to the carbonaceous material was obtained in the same manner as in Example 1-1 except that sulfathiazole (manufactured by TOKYO CHEMICAL INDUSTRY CO., LTD.) was changed to sulfadimethoxine (manufactured by TOKYO CHEMICAL INDUSTRY CO., LTD.).

### Example 1-9

The surface-modified carbonaceous material 9 of Example 1-9 in which the substituent was added to the carbonaceous material was obtained in the same manner as in Example 1-1 except that sulfathiazole (manufactured by TOKYO CHEMICAL INDUSTRY CO., LTD.) was changed to sulfadoxine (manufactured by TOKYO CHEMICAL INDUSTRY CO., LTD.).

### Example 1-10

The surface-modified carbonaceous material 10 of Example 1-10 in which the substituent was added to the carbonaceous material was obtained in the same manner as in Example 1-1 except that sulfathiazole (manufactured by TOKYO CHEMICAL INDUSTRY CO., LTD.) was changed to sulfamethoxypyridazine (manufactured by TOKYO CHEMICAL INDUSTRY CO., LTD.).

### Example 1-11

The surface-modified carbonaceous material 11 of Example 1-11 in which the substituent was added to the carbonaceous material was obtained in the same manner as in Example 1-1 except that sulfathiazole (manufactured by TOKYO CHEMICAL INDUSTRY CO., LTD.) was changed to sulfathizaole (manufactured by TOKYO CHEMICAL INDUSTRY CO., LTD.).

### Example 1-12

The surface-modified carbonaceous material 12 of Example 1-12 in which the substituent was added to the carbonaceous material was obtained in the same manner as in Example 1-1 except that sulfathiazole (manufactured by TOKYO CHEMICAL INDUSTRY CO., LTD.) was changed to sulfisoxazole (manufactured by TOKYO CHEMICAL INDUSTRY CO., LTD.).

### Example 1-13

The surface-modified carbonaceous material 13 of Example 1-13 in which the substituent was added to the carbonaceous material was obtained in the same manner as in Example 1-1 except that the lithium hydroxide aqueous solution was changed to sodium hydroxide aqueous solution (10 normal) and the first liquid dispersion was adjusted to a PH of 10.

### Example 1-14

The surface-modified carbonaceous material 14 of Example 1-14 in which the substituent was added to the carbonaceous material was obtained in the same manner as in Example 1-1 except that the lithium hydroxide aqueous solution was changed to potassium hydroxide aqueous solution and the first liquid dispersion was adjusted to a PH of 10.

### Example 1-15

The surface-modified carbonaceous material 15 of Example 1-15 in which the substituent was added to the carbonaceous material was obtained in the same manner as in Example 1-1 except that the lithium hydroxide aqueous solution was changed to ammonium water and the first liquid dispersion was adjusted to a PH of 10.

### Example 1-16

The surface-modified carbonaceous material 16 of Example 1-16 in which the substituent was added to the carbonaceous material was obtained in the same manner as in Example 1-1 except that the lithium hydroxide aqueous solution was changed to diethylamino ethanol (manufactured by TOKYO CHEMICAL INDUSTRY CO., LTD.) and the first liquid dispersion was adjusted to a PH of 10.

### Example 1-17

The surface-modified carbonaceous material 17 of Example 1-17 in which the substituent was added to the carbonaceous material was obtained in the same manner as in Example 1-1 except that the furnace black (LITX 300, primary particle diameter of 20 nm, BET value of 160 m²g⁻¹, manufactured by Cabot Corporation) was changed to furnace black LITX HP, primary particle diameter of 20 nm, BET value of 100 m²g⁻¹, manufactured by Cabot Corporation).

### Example 1-18

The surface-modified carbonaceous material 18 of Example 1-18 in which the substituent was added to the carbonaceous material was obtained in the same manner as in Example 1-1 except that the furnace black (LITX 300, primary particle diameter of 20 nm, BET value of 160 m²g⁻¹, manufactured by Cabot Corporation) was changed to acetylene black (DENKA BLACK Li 100, primary particle diameter of 35 nm, BET value of 69 m²g⁻¹, manufactured by Denka Company Limited).

### Example 1-19

The surface-modified carbonaceous material 19 of Example 1-19 in which the substituent was added to the carbonaceous material was obtained in the same manner as in Example 1-1 except that the furnace black (LITX 300, primary particle diameter of 20 nm, BET value of 160 m²g⁻¹, manufactured by Cabot Corporation) was changed to acetylene black (Ketjen black, 600J, primary particle diameter of 35 nm, BET value of 1,280 m²g⁻¹, manufactured by Ketjen Corporation).

### Comparative Example 1-1

The surface-modified carbonaceous material a of Comparative Example 1-1 in which a substituent not satisfying the Chemical Formula 1 was added to the carbonaceous material was obtained in the same manner as in Example 1-1 except that sulfathiazole (manufactured by TOKYO CHEMICAL INDUSTRY CO., LTD.) was changed to sulfanilamide (manufactured by TOKYO CHEMICAL INDUSTRY CO., LTD.).

### Comparative Examples 1-2

The surface-modified carbonaceous material b of Comparative Example 1-2 in which a substituent was added to the carbonaceous material was obtained in the same manner as in Example 1-1 except that sulfathiazole (manufactured by TOKYO CHEMICAL INDUSTRY CO., LTD.) was changed to sulfanilic acid (manufactured by TOKYO CHEMICAL INDUSTRY CO., LTD.).

### Comparative Examples 1-3

The surface-modified carbonaceous material c of Comparative Example 1-3 in which a substituent was added to the carbonaceous material was obtained in the same manner as in Example 1-1 except that sulfathiazole (manufactured by TOKYO CHEMICAL INDUSTRY CO., LTD.) was changed to 4-amino fumaric acid (manufactured by TOKYO CHEMICAL INDUSTRY CO., LTD.).

### Comparative Examples 1-4

The surface-modified carbonaceous material d of Comparative Example 1-4 in which a substituent not satisfying the Chemical Formula 1 was added to the carbonaceous material was obtained in the same manner as in Example 1-17 except that sulfathiazole (manufactured by TOKYO CHEMICAL INDUSTRY CO., LTD.) was changed to sulfanilamide (manufactured by TOKYO CHEMICAL INDUSTRY CO., LTD.).

### Comparative Examples 1-5

The surface-modified carbonaceous material e of Comparative Example 1-5 in which a substituent not satisfying the Chemical Formula 1 was added to the carbonaceous material was obtained in the same manner as in Example 1-18 except that sulfathiazole (manufactured by TOKYO CHEMICAL INDUSTRY CO., LTD.) was changed to sulfanilamide (manufactured by TOKYO CHEMICAL INDUSTRY CO., LTD.).

### Comparative Examples 1-6

The surface-modified carbonaceous material f of Comparative Example 1-6 in which a substituent not satisfying the Chemical Formula 1 was added to the carbonaceous material was obtained in the same manner as in Example 1-19 except that sulfathiazole (manufactured by TOKYO CHEMICAL INDUSTRY CO., LTD.) was changed to sulfanilamide (manufactured by TOKYO CHEMICAL INDUSTRY CO., LTD.).

The components used in Examples 1-1 to 1-19 and Comparative Examples 1-1 to 1-6 are shown in Table 1.

**Table 1**

| | Surface-modified carbonaceous material | Base carbon material | Aniline compound |
|---|---|---|---|
| Example 1-1 | Surface-modified carbonaceous material 1 | LITX 300 | Sulfamethizole |
| Example 1-2 | Surface-modified carbonaceous material 2 | LITX 300 | Sulfamethizole |
| Example 1-3 | Surface-modified carbonaceous material 3 | LITX 300 | Sulfamethoxazole |
| Example 1-4 | Surface-modified carbonaceous material 4 | LITX 300 | Sulfadiazine |
| Example 1-5 | Surface-modified carbonaceous material 5 | LITX 300 | Sulfapiridine |
| Example 1-6 | Surface-modified carbonaceous material 6 | LITX 300 | Sulfamethazine |
| Example 1-7 | Surface-modified carbonaceous material 7 | LITX 300 | Sulfamonomethoxine |
| Example 1-8 | Surface-modified carbonaceous material 8 | LITX 300 | Sulfadimethoxine |
| Example 1-9 | Surface-modified carbonaceous material 9 | LITX 300 | Sulfadoxine |
| Example 1-10 | Surface-modified carbonaceous material 10 | LITX 300 | Sulfamethoxypyridazine |
| Example 1-11 | Surface-modified carbonaceous material 11 | LITX 300 | Sulfathiazole |
| Example 1-12 | Manufacturing of Surface-modified Carbonaceous Material 12 | LITX 300 | Sulfisoxazole |
| Example 1-13 | Surface-modified carbonaceous material 13 | LITX 300 | Sulfamethizole |
| Example 1-14 | Surface-modified carbonaceous material 14 | LITX 300 | Sulfamethizole |
| Example 1-15 | Surface-modified carbonaceous material 15 | LITX 300 | Sulfamethizole |
| Example 1-16 | Surface-modified carbonaceous material 16 | LITX 300 | Sulfamethizole |
| Example 1-17 | Surface-modified carbonaceous material 17 | LITX HP | Sulfamethizole |
| Example 1-18 | Surface-modified carbonaceous material 18 | Denka Black Li100 | Sulfamethizole |
| Example 1-19 | Surface-modified carbonaceous material 19 | Ketjen 600J | Sulfamethizole |
| Comparative Example 1-1 | Surface-modified carbonaceous material a | LITX 300 | Sulfanilamide |
| Comparative Example 1-2 | Surface-modified carbonaceous material b | LITX 300 | Sulfanilic acid |
| Comparative Example 1-3 | Surface-modified carbonaceous material c | LITX 300 | 4-Amino fumaric acid |
| Comparative Example 1-4 | Surface-modified carbonaceous material d | LITX HP | Sulfanilamide |
| Comparative Example 1-5 | Surface-modified carbonaceous material e | Denka Black Li 100 | Sulfanilamide |
| Comparative Example 1-6 | Surface-modified carbonaceous material f | Ketjen 600J | Sulfanilamide |

### Example 2-1

### Manufacturing of Liquid Composition 1

N-methyl-2-pyrrolidone as an organic solvent was mixed with the surface-modified carbonaceous material 1 of Example 1-1 to obtain a mixture having a proportion of the surface-modified carbonaceous material at 10 percent by mass followed by irradiation of ultrasonic wave for three minutes using an ultrasonic wave homogenizer (Ultrasonic Generator, manufactured by NISSEI Corporation) to obtain a liquid composition 1 of Example 2-1.

### Evaluation on Dispersibility: Measuring of Median Size

The liquid composition 1 was diluted with the organic solvent at a factor of 100. Thereafter, the median size was measured with a dynamic light scattering device (nanoSAQLA, manufactured by OTSUKA ELECTRONICS Co., LTD.). The results are shown in Table 2.

### Examples 2-2 to 2-24 and Comparative Examples 2-1 to 2-11

The liquid compositions of Examples 2-2 to 2-24 and Comparative Examples 2-1 to 2-11 were obtained in the same manner as in Example 2-1 except that the combinations of the surface-modified carbonaceous materials and the organic solvents as shown in Table 1 were used. In addition, the median size in nm of each liquid composition was measured in the same manner as in Example 2-1. The results are shown in Tables 2-1 and 2-2.

### Comparative Examples 2-12 to 2-14

The following methods were tried to obtain respective liquid compositions of Comparative Examples 2-12 to 2-14. The substances obtained were not liquid compositions but gels. Therefore, it was impossible to measure the particle size distribution.

### Comparative Example 2-12

A total of 18 parts of furnace black (LITX 300, primary particle diameter of 20 nm, BET value of 160 m²g⁻¹, manufactured by Cabot Corporation) was placed in 160 parts of N-methyl-2-pyrroridone followed by irradiation of ultrasonic wave for three minutes using an ultrasonic wave homogenizer (Ultrasonic Generator, manufactured by NISSEI Corporation).

### Comparative Example 2-13

A total of 18 parts of furnace black (LITX 300, primary particle diameter of 20 nm, BET value of 160 m²g⁻¹, manufactured by Cabot Corporation) was placed in 162 parts of deionized water and stirred for one hour. After stirring, 1.5 parts of sulfathiazole (manufactured by Tokyo Chemical Industry Co., Ltd.) as an aniline compound was added once every four hours. The mixture was adjusted to pH 10 with lithium hydroxide aqueous solution (7 normal). This adjusted mixture was demoisturized with an evaporator. After this adjustment, the mixture was subjected to vacuum drying at 60 degrees C for 12 hours. A total of 162 parts of N-methyl-2-pyrroridone was added to the dried substance followed by irradiation of ultrasonic wave for three minutes using an ultrasonic wave homogenizer (Ultrasonic Generator, manufactured by NISSEI Corporation).

### Comparative Example 2-14

A total of 18 parts of furnace black (LITX 300, primary particle diameter of 20 nm, BET value of 160 m²g⁻¹, manufactured by Cabot Corporation) was placed in 162 parts of deionized water and 5 parts of dispersant (MALIALIM^{™} 150A, manufactured by NOF CORPORATION) were placed in 160 parts of N-methyl-2-pyrroridone followed by irradiation of ultrasonic wave for three minutes using an ultrasonic wave homogenizer (Ultrasonic Generator, manufactured by NISSEI Corporation).

**Table 2-1**

| | Surface-modified carbonaceous material | Organic solvent | Median size (nm) |
|---|---|---|---|
| Example 2-1 | Surface-modified carbonaceous material 1 | N-methyl-2-pyrroridone | 160 |
| Example 2-2 | Surface-modified carbonaceous material 2 | N-methyl-2-pyrroridone | 158 |
| Example 2-3 | Surface-modified carbonaceous material 3 | N-methyl-2-pyrroridone | 159 |
| Example 2-4 | Surface-modified carbonaceous material 4 | N-methyl-2-pyrroridone | 159 |
| Example 2-5 | Surface-modified carbonaceous material 5 | N-methyl-2-pyrroridone | 162 |
| Example 2-6 | Surface-modified carbonaceous material 6 | N-methyl-2-pyrroridone | 159 |
| Example 2-7 | Surface-modified carbonaceous material 7 | N-methyl-2-pyrroridone | 161 |
| Example 2-8 | Surface-modified carbonaceous material 8 | N-methyl-2-pyrroridone | 162 |
| Example 2-9 | Surface-modified carbonaceous material 9 | N-methyl-2-pyrroridone | 171 |
| Example 2-10 | Surface-modified carbonaceous material 10 | N-methyl-2-pyrroridone | 169 |
| Example 2-11 | Surface-modified carbonaceous material 11 | N-methyl-2-pyrroridone | 158 |
| Example 2-12 | Surface-modified carbonaceous material 12 | N-methyl-2-pyrroridone | 196 |
| Example 2-13 | Surface-modified carbonaceous material 13 | N-methyl-2-pyrroridone | 158 |
| Example 2-14 | Surface-modified carbonaceous material 14 | N-methyl-2-pyrroridone | 159 |
| Example 2-15 | Surface-modified carbonaceous material 15 | N-methyl-2-pyrroridone | 165 |
| Example 2-16 | Surface-modified carbonaceous material 16 | N-methyl-2-pyrroridone | 167 |
| Example 2-17 | Surface-modified carbonaceous material 17 | N-methyl-2-pyrroridone | 171 |
| Example 2-18 | Surface-modified carbonaceous material 18 | N-methyl-2-pyrroridone | 351 |
| Example 2-19 | Surface-modified carbonaceous material 19 | N-methyl-2-pyrroridone | 402 |
| Example 2-20 | Surface-modified carbonaceous material 1 | Dimethyl sulfoxide | 159 |
| Example 2-21 | Surface-modified carbonaceous material 1 | Dimethyl acrylamide | 161 |
| Example 2-22 | Surface-modified carbonaceous material 1 | Ethanol | 168 |
| Example 2-23 | Surface-modified carbonaceous material 1 | Isopropyl alcohol | 169 |
| Example 2-24 | Surface-modified carbonaceous material 1 | Acetonirile | 167 |

**Table 2-2**

| | Surface-modified carbonaceous material | Organic solvent | Median size (nm) |
|---|---|---|---|
| Comparative Example 2-1 | Surface-modified carbonaceous material a | N-methyl-2-pyrroridone | 232 |
| Comparative Example 2-2 | Surface-modified carbonaceous material b | N-methyl-2-pyrroridone | 219 |
| Comparative Example 2-3 | Surface-modified carbonaceous material c | N-methyl-2-pyrroridone | 358 |
| Comparative Example 2-4 | Surface-modified carbonaceous material d | N-methyl-2-pyrroridone | 252 |
| Comparative Example 2-5 | Surface-modified carbonaceous material e | N-methyl-2-pyrroridone | 561 |
| Comparative Example 2-6 | Surface-modified carbonaceous material f | N-methyl-2-pyrroridone | 701 |
| Comparative Example 2-7 | Surface-modified carbonaceous material b | Dimethyl sulfoxide | 232 |
| Comparative Example 2-8 | Surface-modified carbonaceous material b | Dimethyl Formamide | 223 |
| Comparative Example 2-9 | Surface-modified carbonaceous material b | Ethanol | 219 |
| Comparative Example 2-10 | Surface-modified carbonaceous material b | Isopropyl alcohol | 227 |
| Comparative Example 2-11 | Surface-modified carbonaceous material b | Acetonitrile | 245 |
| Comparative Example 2-12 | Carbonaceous material (LITX 300) | N-methyl-2-pyrroridone | - |
| Comparative Example 2-13 | Mixture of carbonaceous material (LITX 300) and sulfathiazole | N-methyl-2-pyrroridone | - |
| Comparative Example 2-14 | Mixture of carbonaceous material (LITX 300) and dispersant | N-methyl-2-pyrroridone | - |

### Dipole Moment of Surface-treated Carbon Material

### Setting of Model Compound

The carbonaceous material of the surface-modified carbonaceous material of Example 1-1 was converted into anthracene. The substituent b in the Chemical Reaction 1 was applied to the 9 position of anthracene as the substituent to obtain a model compound 1 in which M in the substituent was converted into H.

### Calculating Dipole Moment

Using the non-empirical molecular orbital method, the dipole moment of the model compound 1 was calculated.

Specifically, the dipole moment was calculated using quantum calculation chemical program, Gaussian 16, created by Gaussian Inc., USA. The model compound created was subjected to structure optimization.

The model compounds of the surface-modified carbonaceous materials 2 to 12 of Examples 1-2 to 1-12 and the surface-modified carbonaceous materials a to c of Comparative Examples 1-1 to 1-3 were set in the same manner as in the method for the surface-modified carbonaceous material 1 to calculate the dipole moments thereof.

The type of the corresponding surface-modified carbonaceous materials, the structure of the model compounds, simplified molecular input line entry specification (smiles) linear notation of the structure, the calculated dipole moment (in Debye), and the median sizes shown in Tables 2-1 and 2-2 were shown in Tables 3-1 to 3-4.

**Table 3-1**

| | Example 1-1 |
|---|---|
| | Surface-modified carbonaceous material 1 |
| Structure of model compound | 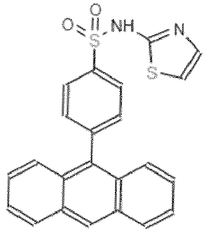 |
| smiles | O=S(=O)(Nc1nccs1)c5ccc(c3 c2ccccc2cc4ccccc34)cc5 |
| Dipole moment (Debye) | 5.42 |
| Median size (nm) | 160 |
| | |

| | Example 1-2 |
|---|---|
| | Surface-modified carbonaceous material 2 |
| Structure of model compound | 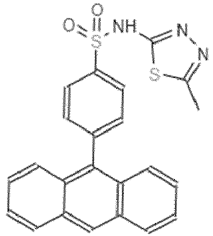 |
| smiles | Cc5nnc(NS(=O)(=O)c4ccc(c2c1ccccc1cc3ccccc23)cc4)s5 |
| Dipole moment (Debye) | 4.73 |
| Median size (nm) | 158 |
| | |

| | Example 1-3 |
|---|---|
| | Surface-modified carbonaceous material 3 |
| Structure of model compound | 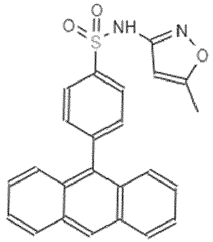 |
| smiles | Cc5cc(NS(=O)(=O)c4ccc(c2c1ccccc1cc3ccccc23)cc4)no5 |
| Dipole moment (Debye) | 4.44 |
| Median size (nm) | 159 |
| | |
| | Example 1-4 |
| | Surface-modified carbonaceous material 4 |
| Structure of model compound | 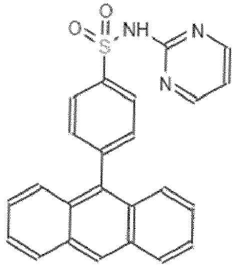 |
| smiles | O=S(=O)(Nc1ncccn1)c5ccc(c3c2ccccc2cc4ccccc34)cc5 |
| Dipole moment (Debye) | 5.29 |
| Median size (nm) | 159 |

**Table 3-2**

| | Example 1-5 |
|---|---|
| | Surface-modified carbonaceous material 5 |
| Structure of model compound | 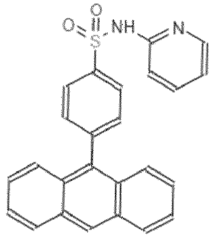 |
| smiles | O=S(=O)(Nc1ccccn1)c5ccc(c3c2ccccc2cc4ccccc34)cc5 |
| Dipole moment (Debye) | 5.67 |
| Median size (nm) | 162 |
| | |

| | Example 1-6 |
|---|---|
| | Surface-modified carbonaceous material 6 |
| Structure of model compound | 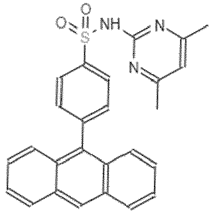 |
| smiles | Cc5cc(C)nc(NS(=O)(=O)c4ccc(c2c1ccccc1cc3ccccc23)cc4)n5 |
| Dipole moment (Debye) | 5.50 |
| Median size (nm) | 159 |
| | |

| | Example 1-7 |
|---|---|
| | Surface-modified carbonaceous material 7 |
| Structure of model compound | 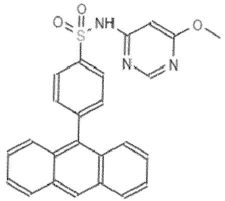 |
| smiles | COc5cc(NS(=O)(=O)c4ccc(c2c1ccccc1cc3ccccc23)cc4)ncn5 |
| Dipole moment (Debye) | 5.46 |
| Median size (nm) | 161 |
| | |

| | Example 1-8 |
|---|---|
| | Surface-modified carbonaceous material 8 |
| Structure of model compound | 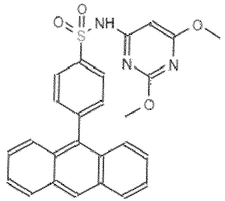 |
| smiles | COc5cc(NS(=O)(=O)c4ccc(c2c1ccccc1cc3ccccc23)cc4)nc(OC)n5 |
| Dipole moment (Debye) | 4.16 |
| Median size (nm) | 162 |

**Table 3-3**

| | Example 1-9 |
|---|---|
| | Surface-modified carbonaceous material 9 |
| Structure of model compound | 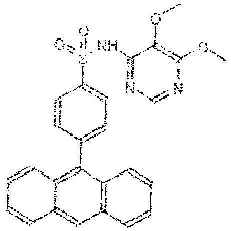 |
| smiles | COc5ncnc(NS(=O)(=O)c4ccc(c2c1ccccc1cc3ccccc23)cc4)c5OC |
| Dipole moment (Debye) | 3.87 |
| Median size (nm) | 171 |
| | |

| | Example 1-10 |
|---|---|
| | Surface-modified carbonaceous material 10 |
| Structure of model compound | 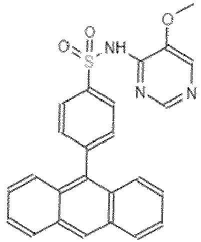 |
| smiles | COc1cncnc1NS(=O)(=O)c5ccc(c3c2ccccc2cc4ccccc34)cc5 |
| Dipole moment (Debye) | 3.43 |
| Median size (nm) | 169 |
| | |

| | Example 1-11 |
|---|---|
| | Surface-modified carbonaceous material 11 |
| Structure of model compound | 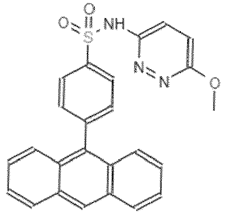 |
| smiles | COc5ccc(NS(=O)(=O)c4ccc(c2c1ccccc1cc3ccccc23)cc4)nn5 |
| Dipole moment (Debye) | 5.16 |
| Median size (nm) | 158 |
| | |

| | Example 1-12 |
|---|---|
| | Surface-modified carbonaceous material 12 |
| Structure of model compound | 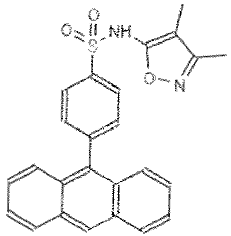 |
| smiles | Cc5noc(NS(=O)(=O)c4ccc(c2c1ccccc1cc3ccccc23)cc4)c5C |
| Dipole moment (Debye) | 5.21 |
| Median size (nm) | 196 |

**Table 3-4**

| Comparative Example 1-1 | |
|---|---|
| Surface-modified carbonaceous material a | |
| Structure of model compound | 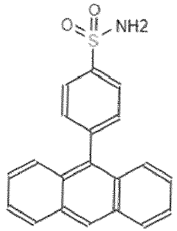 |
| smiles | NS(=O)(=O)c4ccc(c2c1ccccc1cc3ccccc23)cc4 |
| Dipole moment (Debye) | 3.73 |
| Median size (nm) | 232 |
| | |

| | Comparative Example 1-2 |
|---|---|
| | Surface-modified carbonaceous material b |
| Structure of model compound | 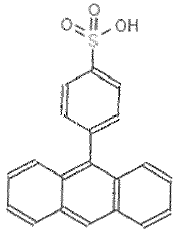 |
| smiles | O=S(=O)(O)c4ccc(c2c1ccccc1cc3ccccc23)cc4 |
| Dipole moment (Debye) | 4.74 |
| Median size (nm) | 219 |
| | |

| | omparative Example 1-3 |
|---|---|
| | Surface-modified carbonaceous material b |
| Structure of model compound | 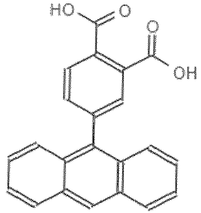 |
| smiles | O=C(O)c4ccc(c2c1ccccc1cc3ccccc23)cc4C(=O)O |
| Dipole moment (Debye) | 7.82 |
| Median size (nm) | 358 |

As seen in the results shown in Tables 2-1 to 2-2, regarding the same type of the surface-modified carbonaceous materials 1 to 16 used in Examples 2-1 to 2-16 and the surface-modified carbonaceous materials a to c of Comparative Examples 2-1 to 2-3, the surface-modified carbonaceous materials of the present disclosure are finer particles than the typical surface-modified carbonaceous materials particles, thus demonstrating good dispersibility. This is true in the comparison between the surface-modified carbonaceous materials 17 to 19 of Examples 2-17 to 2-19 and the surface-modified carbonaceous materials d to f of Comparative Examples 2-4 to 2-6.

In Examples 2-20 to 2-24, the surface-modified carbonaceous materials of the present disclosure demonstrate good dispersibility in comparison with the typical surface-modified carbonaceous materials even when aprotic polar solvents or alcohol solvents other than N-methyl-2-pyrroridone (NMP) are used. Of these, NMP as an aprotic polar solvent, dimethylsulfoxide (DMSO), dimethyl sulfoxide (DMF), and acetonitrile demonstrate better dispersibility than the alcohol solvents evaluated.

As seen in the results shown in Tables 3-1 to 3-4, the surface-modified carbonaceous materials 1 to 12 of the present disclosure demonstrate excellent dispersibility regardless of the dipole moment when compared with the surface-modified carbonaceous materials a to c as typical surface-modified carbonaceous materials. These comparisons indicate that dispersibility primarily does not depend on the size of dipole moment but on the structure of the surface-modified functional group.

In addition, a surface-modified carbonaceous material having a dipole moment of 4.0 debye or greater is confirmed to be stably dispersed.

### Examples 3 to 4

The current collector foils, electrodes, and electrochemical elements containing the surface-modified carbonaceous material of the present disclosure were manufactured in the following manner.

### Example 3-1

Manufacturing Examples of Carbonaceous Material - Metal Complex Current Collector

The liquid composition 1 containing the surface-modified carbonaceous material 1 of Example 2-1 were applied to copper foil (thickness of 15 µm, manufactured by Furukawa Electric Co., Ltd.) with a bar coater to achieve an average thickness of 1 µm followed by drying at 150 degrees C for two hours to manufacture carbonaceous material-metal complex current collector foil.

As a result, the carbonaceous material was visually confirmed that it was uniformly applied onto the current collector foil without using a dispersant.

### Example 3-2

### Manufacturing of Negative Electrode 1

### Manufacturing of Negative Electrode Mixture Layer 1

Water was added to 93 parts of powdered graphite KS6 (manufactured by Timcal Ltd.) and 5 parts of acetylene black (Denka black Li, manufactured by Denka Company Limited) followed by kneading. A total of 1 part of 2 percent by mass carboxymethyl cellulose aqueous solution (manufactured by Daicel Corporation) was added to the mixture followed by kneading. Moreover, 1 part of styrene butadiene rubber (manufactured by Zeon Corporation) was added to obtain a slurry for the negative electrode mixture layer 1.

The slurry for the negative electrode mixture layer 1 was applied onto copper foil (thickness of 15 µm, manufactured by Furukawa Electric Co., Ltd.) as a negative electrode current collector followed by subjecting to vacuum drying at 150 degrees C for 12 hours. Next, the dried substance was compressed using a pressing machine (manufactured by TESTER SANGYO CO.. LTD.) to form a negative electrode mixture layer 1 of a solid portion per unit of area of 1.6 g/cm³ on the negative electrode current collector. The same negative electrode mixture layer 1 was formed on the other side of the negative electrode current collector to obtain a negative electrode 1 on which the negative electrode mixture layers 1 were formed on both sides of the negative electrode current collector.

### Manufacturing of Composite Negative Electrode Mixture Layer 1

The liquid composition 20 containing the surface-modified carbonaceous material 1 of Example 2-20 was applied onto the negative electrode mixture layer 1 using a liquid discharging device (EV2500, manufactured by Ricoh Co., Ltd.) and a liquid discharging head (5421F head, manufactured by Ricoh Co., Ltd.) followed by drying at 120 degrees C for 10 minutes and vacuum-drying at 100 degrees C for two hours to obtain a target composite negative electrode mixture layer 1.

This target composite negative electrode mixture layer 1 of the negative electrode mixture layer 1 and the surface-modified carbonaceous material 1 was formed on the other side of the copper foil as the negative electrode current collector to form a composite negative electrode 1.

### Example 3-3

### Manufacturing of Positive Electrode 1

### Manufacturing of Positive Electrode Mixture Layer 1

A total of 93 parts of lithium nickel cobalt aluminum composite oxide (NCA, manufactured by Sigma-Aldrich Co. LLC.), 3 parts of acetylene black (Denka Black, manufactured by Denka Company Limited) as an electroconductive agent, 4 parts of polyvinylidene fluoride (Sigma-Aldrich Co. LLC.) as a binder resin, and 100 parts ofN-methyl-2-pyrroridone were mixed to obtain a slurry for a positive electrode mixture layer 1.

Then the slurry for positive electrode mixture layer 1 was applied by die coating to aluminum foil (thickness of 15 µm, manufactured by UACJ Corporation) as a positive electrode current collector at a conveying sped of 0.5 m/minute followed by drying to form a positive electrode mixture layer 1 with a solid portion per unit of area of 15.0 mg/cm². The same positive electrode mixture layer 1 was formed on the other side of the negative electrode current collector to obtain the aluminum foil with the positive electrode mixture layers 1 on both sides.

### Manufacturing of Composite Positive Mixture Layer

The liquid composition 20 containing the surface-modified carbonaceous material 1 of Example 2-20 was applied onto the positive electrode mixture layer 1 using a liquid discharging device (EV2500, manufactured by Ricoh Co., Ltd.) and a liquid discharging head (5421F head, manufactured by Ricoh Co., Ltd.) followed by drying at 120 degrees C for 10 minutes and vacuum-drying at 100 degrees C for 2 hours to obtain a target composite positive electrode mixture layer 1.

The composite positive electrode mixture layer 1 of the positive electrode mixture layer 1 and the surface-modified carbonaceous material 1 were formed on both sides of the aluminum foil as the positive electrode current collector to manufacture a positive electrode 1.

### Example 3-4

### Manufacturing of Positive Electrode 2

### Manufacturing of Composite Positive Electrode Mixture Layer 2

A total of 3 parts of the surface-modified carbonaceous material 1 was mixed with 100 parts of N-methyl-2-pyrroridone. The mixture obtained was irradiated with ultrasonic wave for 15 minutes in total using an ultrasonic wave homogenizer (Ultrasonic Generator, manufactured by NISSEI Corporation).

A total of 93 parts of lithium nickel cobalt aluminum composite oxide (NCA, manufactured by Sigma-Aldrich Co. LLC.), 3 parts of acetylene black (Denka Black, manufactured by Denka Company Limited) as an electroconductive agent, and 4 parts of polyvinylidene fluoride (Sigma-Aldrich Co. LLC.) as a binder resin were mixed with the obtained liquid composition to obtain a liquid composition for a composite positive mixture layer 2.

Then the liquid composition for a composite positive electrode mixture layer 2 was applied by die coating to aluminum foil (thickness of 15 µm, manufactured by UACJ Corporation) at a conveying sped of 0.5 m/minute followed by drying to form a positive electrode mixture layer 2 with a solid portion per unit of area of 15.0 mg/cm². The electrode mixture layer obtained was turned upside down followed by the same process to form the composite positive electrode mixture layers 2 on both sides of the aluminum foil.

The positive electrode 2 was thus manufactured in which the composite positive electrode mixture layers 2 containing the surface-modified carbonaceous material 1 were formed on both sides of the aluminum foil as the positive electrode current collector.

### Example 4-1

### Manufacturing of Electrochemical Element 1

### Preparation of Non-aqueous Electrolyte

LiPF₆ was dissolved in a liquid mixture of ethylene carbonate, dimethyl carbonate, and methylethyl carbonate at a mass ratio of 1:1:1 to achieve 1.5 M to obtain a non-aqueous electrolyte.

### Manufacturing of Electrochemical Element 1

The positive electrode 1 and the negative electrode 1 were used as the positive electrode and the negative electrode.

Three of the positive electrodes and four of the negative electrodes were alternately laminated with film separators therebetween. A nickel tab as a lead wire was welded to the region where the negative electrode mixture layer of the negative electrode was not formed. An aluminum tab as a lead wire was welded to the region where the positive electrode mixture layer of the positive electrode was not formed (FIG. 12).

A non-aqueous electrolyte was infused into the electrochemical element followed by sealing with aluminum laminate to manufacture an electrochemical element 100 as a non-aqueous storage device.

### Example 4-2

### Manufacturing of Electrochemical Element 2

Electrochemical element 2 was prepared in the same manner as in Example 4-1 except that the positive electrode 2 and the negative electrode 1 were used as the positive electrode and the negative electrode, respectively.

### Measuring of Output of Electrochemical Element

The outputs of the electrochemical elements 1 and 2 of Examples 4-1 and 4-2 were measured and evaluated in the following manner.

The lead wire of the electrochemical element was connected to a battery tester (TOSCAT-3100, manufactured by TOYO SYSTEM CO., LTD.). The element was charged at a maximum voltage of 4.2 V and a current rate of 0.2 C for five hours by constant voltage and constant current. After 10 minutes' downtime, the element was caused to discharge at a current rate of 0.2 C for 2.5 hours to achieve a charge rate of the non-aqueous storage element of 50 percent.

Next, the device was caused to discharge at a pulse of a current rate 1 C to 10 C for 10 seconds. Based on the related straight line of the voltage and the current after discharging, the electrical power to 2.5 V cut-off voltage was calculated to obtain the output.

The output of the non-aqueous storage element is evaluated as good when it is 10.5 W or greater. Each output of the electrochemical elements 1 and 2 of Examples 4-1 and 4-2 was 10.5 W or greater.

These results indicate that even the electrochemical element manufactured using a liquid composition not containing a dispersant can have excellent output property when the surface-modified carbonaceous material of the present disclosure is used.

Aspects of the present disclosure are, for example, as follows.
1. A surface-modified carbonaceous material contains a carbonaceous material to which a substituent represented by the following Chemical Formula 1 is added. 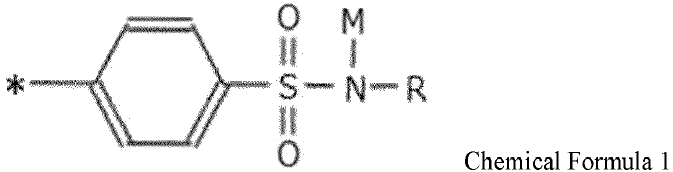 In the Chemical Formula 1, M represents a metal ion, an organic amine, or ammonium, * represents a binding site, and R represents the following Chemical Formula 2 or the following Chemical Formula 3. 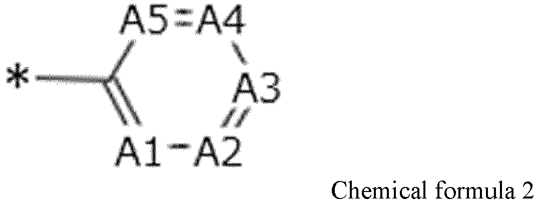 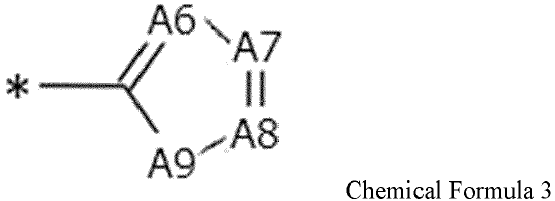 In the Chemical Formulae 2 and 3, A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.
2. The surface-modified carbonaceous material according to the 1 mentioned above, where in a model compound, in which the carbonaceous material of the surface-modified carbonaceous material is converted into anthracene and the substituent is added at the 9 position of anthracene, a dipole moment is 4.0 debye or greater according to the non-empirical molecular orbital method.
3. The surface-modified carbonaceous material according to the 1 or 2 mentioned above, where the metal ion contains a lithium ion.
4. The surface-modified carbonaceous material according to any one of the 1 to 3 mentioned above, where the surface-modified carbonaceous material is used for forming an electrode.
5. A method of manufacturing a surface-modified carbonaceous material includes allowing to react a radical compound represented by the following Chemical Formula 4 with the surface of a carbonaceous material to bond a functional group represented by the following Chemical formula 1 to the surface of the carbonaceous material. 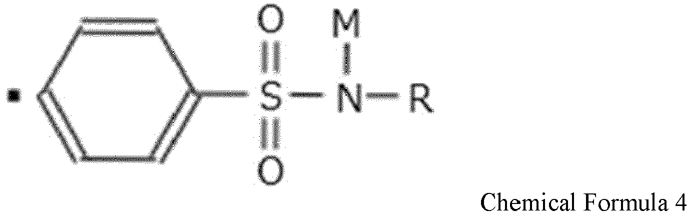 In the Chemical Formula 4, M represents a metal ion, an organic amine, or ammonium, ■ represents a radical, and R represents the following Chemical Formula 2 or the following Chemical Formula 3. 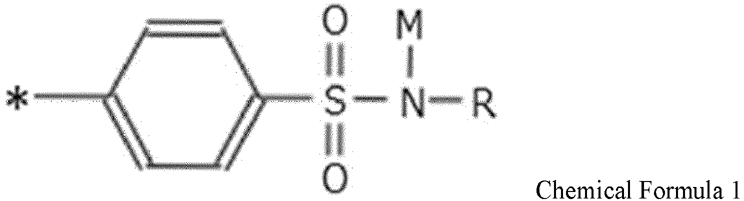 In the Chemical Formula 1, M represents a metal ion, an organic amine, or ammonium, * represents a binding site, and R represents the following Chemical Formula 2 or the following Chemical Formula 3. 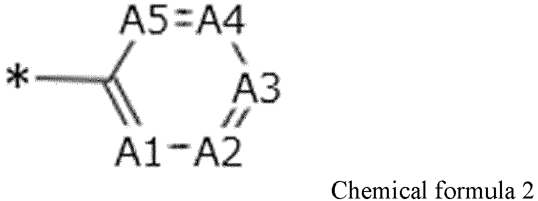 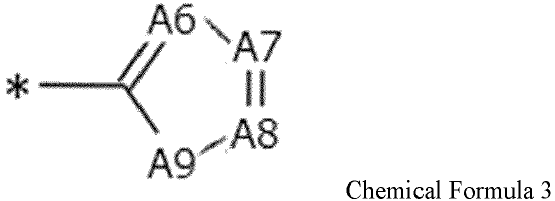 In the Chemical Formulae 2 and 3, A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.
6. The method according to the 5 mentioned above, where the radical compound is produced from a diazonium salt represented by the following Chemical Formula 5. 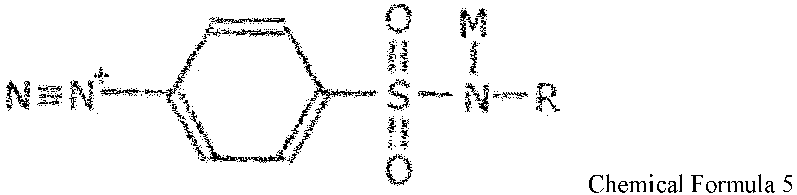 In the Chemical Formula 5, M represents a metal ion, an organic amine, or ammonium and R represents the above Chemical Formula 2 or the following Chemical Formula 3.
7. An electrode contains a current collector and an electrode mixture layer containing the surface-modified carbonaceous material of any one of the 1 to 4 mentioned above.
8. A liquid composition contains the surface-modified carbonaceous material of any one of the 1 to 4 mentioned above and an organic solvent at least one of an aprotic polar solvent and an alcohol solvent.
9. The liquid composition according to the 8 mentioned above, further contains an active material.
10. A container contains the liquid composition of the 8 or 9 mentioned above.
11. A device for manufacturing an electrode includes the container of the 10 mentioned above and a device for applying the liquid composition in the container to a current collector.
12. A method of manufacturing an electrode includes applying the liquid composition of the 8 or 9 mentioned above.
13. The method according to the 12 mentioned above, wherein the liquid composition is applied by inkjetting.
14. An electrochemical element contains the electrode of the 7 mentioned above.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A surface-modified carbonaceous material comprising:
a carbonaceous material to which a substituent represented by the following Chemical Formula 1 is added, 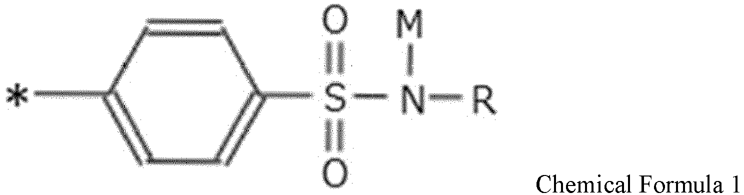 where M represents a metal ion, an organic amine, or ammonium, * represents a binding site, and R represents the following Chemical Formula 2 or the following Chemical Formula 3, 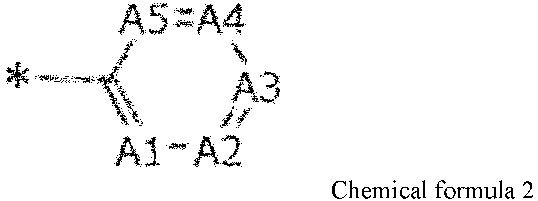 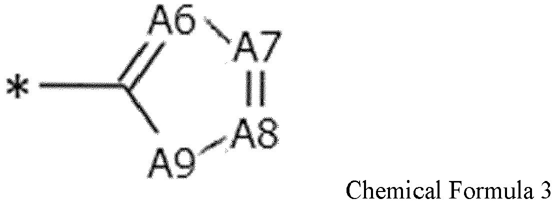 where A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

2. The surface-modified carbonaceous material according to claim 1,
wherein a model compound, in which the carbonaceous material of the surface-modified carbonaceous material is converted into anthracene and the substituent is added at the 9 position of anthracene, has a dipole moment of 4.0 debye or greater according to a non-empirical molecular orbital method.

3. The surface-modified carbonaceous material according to claim 1 or 2,
wherein the metal ion comprises a lithium ion.

4. The surface-modified carbonaceous material according to any one of claims 1 to 3,
wherein the surface-modified carbonaceous material is used for forming an electrode.

5. A method of manufacturing a surface-modified carbonaceous material comprising:
allowing to react a radical compound represented by the following Chemical Formula 4 with a surface of a carbonaceous material to bond a functional group represented by the following Chemical formula 1 to the surface of the carbonaceous material, 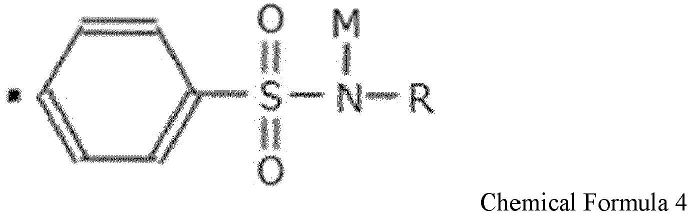 where M represents a metal ion, an organic amine, or ammonium, ■ represents a radical, and R represents the following Chemical Formula 2 or the following Chemical Formula 3, 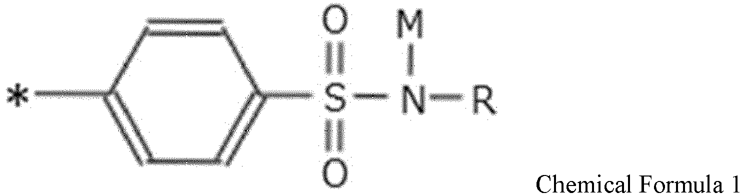 where M represents a metal ion, an organic amine, or ammonium, * represents a binding site, and R represents the following Chemical Formula 2 or the following Chemical Formula 3, 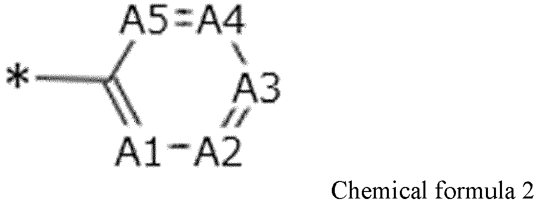 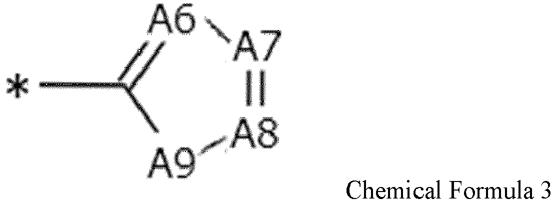 where A1, A2, A3, A4, and A5 each, independently represent CR's or N's, A6, A7, and A8 each, independently represent Cr's or N's, A9 represents CR'R', NR', O, or S, where R' independently represents hydrogen atoms, alkyl groups, or alkoxy groups, and * represents a binding site.

6. The method according to claim 5,
wherein the radical compound is produced from a diazonium salt represented by the following Chemical Formula 5, 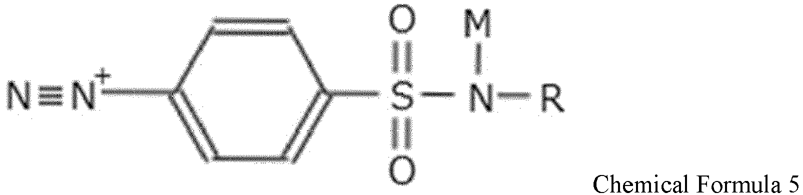 where M represents a metal ion, an organic amine, or ammonium and R represents the above Chemical Formula 2 or the following Chemical Formula 3.

7. An electrode (10) comprising:
A current collector (1); and
an electrode mixture layer (2) comprising the surface-modified carbonaceous material of any one of claims 1 to 4.

8. A liquid composition comprising:
the surface-modified carbonaceous material of any one of claims 1 to 4; and
an organic solvent at least one of an aprotic polar solvent and an alcohol solvent.

9. The liquid composition according to claim 8, further comprising an active material.

10. A container (307) comprising:
the liquid composition of claim 8 or 9.

11. A device (300) for manufacturing an electrode, comprising:
the container (307) of claim 10; and
a device (306) to apply the liquid composition in the container to a target.

12. A method of manufacturing an electrode comprising:
applying the liquid composition of claim 8 or 9.

13. The method according to claim 12, wherein the applying comprising inkjetting.

14. An electrochemical element (100) comprising:
the electrode (10) of claim 7.
